(19) Europäisches Patentamt
European Patent Office
Office européen des brevets

(11) **EP 3 183 068 B1**

(12) **EUROPÄISCHE PATENTSCHRIFT**

(45) Veröffentlichungstag und Bekanntmachung des Hinweises auf die Patenterteilung:
**06.06.2018   Patentblatt 2018/23**

(21) Anmeldenummer: **15766058.0**

(22) Anmeldetag: **21.08.2015**

(51) Int Cl.:
*B05D 7/00* (2006.01)          *C09D 175/04* (2006.01)
*C09D 167/02* (2006.01)        *C09D 133/14* (2006.01)
*C09D 177/08* (2006.01)        *C08L 77/08* (2006.01)

(86) Internationale Anmeldenummer:
**PCT/EP2015/069260**

(87) Internationale Veröffentlichungsnummer:
**WO 2016/026964 (25.02.2016 Gazette 2016/08)**

(54) **WÄSSRIGE BESCHICHTUNGSZUSAMMENSETZUNG ENTHALTEND EIN AUS WENIGSTENS EINEM POLYAMID UND WENIGSTENS EINEM WEITEREN POLYMER HERSTELLBARES VERDICKUNGSMITTEL**

AQUEOUS COATING COMPOSITION CONTAINING A THICKENING AGENT MADE FROM AT LEAST ONE POLYAMIDE AND AT LEAST ONE ADDITIONAL POLYMER

COMPOSITION AQUEUSE DE REVÊTEMENT CONTENANT AU MOINS UN AGENT ÉPAISSISSANT OBTENU À PARTIR D'AU MOINS UN POLYAMIDE ET D'AU MOINS UN AUTRE POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2014   EP 14182027**

(43) Veröffentlichungstag der Anmeldung:
**28.06.2017   Patentblatt 2017/26**

(73) Patentinhaber: **BASF Coatings GmbH**
**48165 Münster (DE)**

(72) Erfinder:
• **CORTEN, Cathrin**
  **59423 Unna (DE)**
• **EIERHOFF, Dirk**
  **48155 Münster (DE)**
• **HEIMEIER, Ursula**
  **48324 Sendenhorst (DE)**
• **KANNGIESSER, Klaus-Jürgen**
  **48165 Münster (DE)**

(74) Vertreter: **BASF IP Association**
**BASF SE**
**G-FLP-C006**
**67056 Ludwigshafen (DE)**

(56) Entgegenhaltungen:
**WO-A1-2009/100938     JP-A- 2005 171 155
US-A- 5 994 494**

EP 3 183 068 B1

**Beschreibung**

Die vorliegende Erfindung betrifft eine wässrige Beschichtungszusammensetzung umfassend wenigstens ein Bindemittel (A) umfassend wenigstens ein polymeres Harz (A1), wenigstens ein Pigment (B) und eine wässrige Dispersion wenigstens eines Verdickungsmittels (C), wobei (C) erhältlich ist durch ein Verfahren umfassend wenigstens die Schritte (1), (2), (3) und (4), nämlich Herstellen einer Dispersion oder Lösung wenigstens eines Polyurethans als polymeres Harz (C2) in wenigstens einem organischen Lösemittel (Schritt (1)), Herstellen einer Mischung aus der nach Schritt (1) erhaltenen Dispersion oder Lösung und einer Schmelze oder Lösung wenigstens eines Polyamids als wenigstens ein polymeres Harz (C1) mit einer Säure-Zahl in einem Bereich von 1 bis 200 mg KOH pro g an (C1) (Schritt (2)), Zugeben von Wasser zu der nach Schritt (2) erhaltenen Mischung (Schritt (3)) und Entfernen des organischen Lösemittels aus der nach Schritt (3) erhaltenen Mischung unter Erhalt der wässrigen Dispersion von (C) (Schritt (4)), ihre Verwendung zur zumindest teilweisen Beschichtung eines gegebenenfalls beschichteten Substrats mit einer Basislackschicht, ein solches Beschichtungsverfahren sowie ein entsprechend beschichtetes Substrat.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Mehrschichtlackierungen werden dabei bevorzugt nach dem sogenannten "Basislack/Klarlack"-Verfahren aufgebracht, d.h. es wird ein pigmentierter Basislack vorlackiert und nach kurzer Ablüftzeit ohne Einbrennschritt (Nass-in-Nass-Verfahren) mit Klarlack überlackiert. Anschließend werden Basislack und Klarlack zusammen eingebrannt. Besonders große Bedeutung hat das "Basislack/Klarlack"-Verfahren bei der Applikation von Automobil-Metalleffektlacken erlangt.

Aus wirtschaftlichen und ökologischen Gründen besteht ein Bedarf, bei der Applikation solcher Mehrschichtlackierungen, insbesondere bei der Applikation der Basislackschicht, wässrige Beschichtungszusammensetzungen einzusetzen.

Die Beschichtungszusammensetzungen zur Herstellung dieser Basislackschichten sollten nach dem vorstehend genannten "Nass-in-Nass"-Verfahren zu verarbeiten sein, d.h. sie sollten nach einer möglichst kurzen Vortrocknungszeit ohne Einbrennschritt mit einer transparenten Deckschicht, d.h. einer Klarlackschicht, überlackiert werden können, ohne dass dabei Störungen im visuellen Erscheinungsbild wie zum Beispiel sogenannte Nadelstiche, Stippen und/oder Verlaufsstörungen auftreten. Um solche Störungen zumindest zu minimieren, werden üblicherweise unter anderem Rheologiehilfsmittel in den aufzutragenden Beschichtungszusammensetzungen eingesetzt.

Bei Metalleffektlacken des Basislack/Klarlack-Typs müssen außerdem noch weitere Anforderungen erfüllt werden. Der Metalleffekt hängt entscheidend von der Orientierung der Metallpigmentteilchen in der Lackschicht ab. Ein im "Nass-in-Nass"-Verfahren zu verarbeitender Metalleffektbasislack muss demnach Lackfilme liefern, in denen die Metallpigmente nach der Applikation in einer günstigen räumlichen Orientierung vorliegen und in denen diese Orientierung schnell so fixiert wird, dass sie im Laufe des weiteren Lackierungsprozesses nicht gestört werden kann. Geeignete Kenngrößen zur Charakterisierung des Metalleffektes sind die Helligkeit des Farbtons und der Flop-Index.

Aus EP 0 877 063 A2 sind wässrige Beschichtungszusammensetzungen bekannt, die ein Polyamid enthalten, um eine ausreichende Sedimentationsstabilität der in den Zusammensetzungen enthaltenen Pigmente zu gewährleisten. Nachteilig an der Gegenwart eines solchen Polyamids als alleiniges Rheologiehilfsmittel in wässrigen Beschichtungszusammensetzungen ist jedoch insbesondere das Auftreten von Stippen bei der Verarbeitung mittels des "Nass-in-Nass"-Verfahrens.

Aus EP 1 153 989 A1 sind wässrige Beschichtungszusammensetzungen bekannt, die neben einem Polyamid wie beispielsweise dem kommerziell erhältlichen Polyamid "Disparlon® AQ-600" zudem als Rheologiehilfsmittel ein Metallsilikat wie beispielsweise das kommerziell erhältliche Metallsilikat "Laponite® RD" enthalten. Nachteilig an der Gegenwart eines solchen Metallsilikats in wässrigen Beschichtungszusammensetzungen insbesondere in Kombination mit den in EP 1 153 989 A1 genannten Polyamiden ist jedoch oftmals das Auftreten von Nadelstichen und/oder Stippen bei der Verarbeitung mittels des "Nass-in-Nass"-Verfahrens.

In WO 2009/100938 A1 wird versucht, dieses Problem dahingehend zu lösen, dass das Metallsilikat zumindest teilweise durch ein Acrylat-Verdickungsmittel auf Poly(meth)acrylsäure-Basis wie beispielsweise einer Polyacrylsäure ersetzt wird. Neben einem solchen Verdickungsmittel enthalten die in dieser Druckschrift offenbarten Beschichtungszusammensetzungen zudem ein Polyamid wie beispielsweise das kommerziell erhältliche Polyamid "Disparlon® AQ-630". Nachteilig an den in WO 2009/100938 A1 beschriebenen Beschichtungszusammensetzungen ist jedoch das Auftreten von Stippen bei der Einarbeitung des Polyamids in die Beschichtungszusammensetzungen. Zudem weisen die in WO 2009/100938 A1 beschriebenen Beschichtungszusammensetzungen insbesondere bei höheren Temperaturen wie beispielsweise Temperaturen ≥40°C keine ausreichende Lagerstabilität auf. Ferner erfordert der Einsatz der in WO 2009/100938 A1 beschriebenen Polyamide üblicherweise einen hohen Anteil an organischen Lösemitteln, was aus ökologischen Gründen unerwünscht ist.

Es besteht daher ein Bedarf an wässrigen Beschichtungszusammensetzungen, insbesondere solcher zur Verarbeitung mittels des "Nass-in-Nass"-Verfahrens geeigneter Beschichtungszusammensetzungen wie Basislackzusammensetzungen, welche die vorstehend genannten Nachteile nicht aufweisen.

Eine Aufgabe der vorliegenden Erfindung ist es daher, eine flüssige Beschichtungszusammensetzung, insbesondere eine flüssige Basislackzusammensetzung, zur Verfügung zu stellen, welche Vorteile gegenüber aus dem Stand der Technik bekannten Beschichtungszusammensetzungen aufweist. Insbesondere ist es eine Aufgabe der vorliegenden Erfindung, eine flüssige Beschichtungszusammensetzung, insbesondere eine flüssige Basislackzusammensetzung, zur Verfügung zu stellen, welche sich durch vorteilhafte Applikationseigenschaften auszeichnet und welche ökologisch unbedenklicher als üblicherweise eingesetzte Zusammensetzungen, insbesondere im Wesentlichen frei von organischen Lösemitteln ist, wobei aber gleichzeitig der Metalleffekt der Beschichtungszusammensetzung nicht negativ beeinflusst werden soll.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Beschichtungszusammensetzung umfassend

wenigstens ein Bindemittel (A) umfassend wenigstens ein polymeres Harz (A1) und gegebenenfalls wenigstens ein Vernetzungsmittel (A2),

wenigstens ein Pigment (B) und

eine wässrige Dispersion wenigstens eines Verdickungsmittels (C),

zur zumindest teilweisen Beschichtung eines gegebenenfalls beschichteten Substrats mit einer Basislackschicht,

dadurch gekennzeichnet, dass das Verdickungsmittel (C) erhältlich ist durch ein Verfahren umfassend wenigstens die Schritte (1), (2), (3) und (4), nämlich

(1) Herstellen einer Dispersion oder Lösung wenigstens eines Polyurethans als polymeres Harz (C2) in wenigstens einem organischen Lösemittel,

(2) Herstellen einer Mischung aus der nach Schritt (1) erhaltenen Dispersion oder Lösung und einer Schmelze oder Lösung wenigstens eines Polyamids als wenigstens ein polymeres Harz (C1) mit einer Säure-Zahl in einem Bereich von 1 bis 200 mg KOH pro g an (C1),

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion des wenigstens einen Verdickungsmittels (C).

Ein weiterer Gegenstand der vorliegenden Erfindung ist eine wässrige Beschichtungszusammensetzung umfassend

wenigstens ein Bindemittel (A) umfassend wenigstens ein polymeres Harz (A1) und gegebenenfalls wenigstens ein Vernetzungsmittel (A2),

wenigstens ein Pigment (B) und

eine wässrige Dispersion wenigstens eines Verdickungsmittels (C),

zur zumindest teilweisen Beschichtung eines gegebenenfalls beschichteten Substrats mit einer Basislackschicht,

dadurch gekennzeichnet, dass das Verdickungsmittel (C) erhältlich ist durch ein Verfahren umfassend wenigstens die Schritte (1), (2), (3) und (4), nämlich

(1) Herstellen einer Dispersion oder Lösung wenigstens eines polymeren Harzes (C2) in wenigstens einem organischen Lösemittel, wobei das polymere Harz (C2) ein Polyurethan ist,

(2) Herstellen einer Mischung aus der nach Schritt (1) erhaltenen Dispersion oder Lösung und einer Schmelze oder Lösung wenigstens eines Polyamids als wenigstens ein polymeres Harz (C1), welches eine Säure-Zahl in einem Bereich von 1 bis 200 mg KOH pro g an (C1) aufweist,

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion des wenigstens einen Verdickungsmittels (C).

Es wurde überraschend gefunden, dass sich die erfindungsgemäße wässrige Beschichtungszusammensetzung insbesondere im "Basislack/Klarlack"-Verfahren zum Aufbringen einer Basislackschicht auf eine gegebenenfalls mit einer Grundierungsschicht beschichtete Oberfläche eines Substrats eignet und deshalb als Basislackbeschichtungszusammensetzung eingesetzt werden kann.

Es wurde ferner überraschend gefunden, dass insbesondere durch die Gegenwart des speziellen erfindungsgemäß eingesetzten Verdickungsmittels (C) das Auftreten von Nadelstichen, Stippen und Verlaufsstörungen verhindert werden kann, welche bei Einsatz üblicher Rheologiehilfsmittel wie zum Beispiel Laponite® in Kombination mit Polyamiden oder Polyamiden allein als Verdickungsmittel oftmals beobachtet werden.

Zudem wurde überraschend festgestellt, dass insbesondere durch die Gegenwart des speziellen erfindungsgemäß eingesetzten Verdickungsmittels (C) der Metalleffekt der Beschichtungszusammensetzung bei Aufbringen auf ein Substrat nicht negativ beeinflusst wird und sich die erfindungsgemäße Beschichtungszusammensetzung insbesondere durch einen guten Flop-Index und eine gute Helligkeit auszeichnet.

Ferner zeichnet sich die erfindungsgemäße Beschichtungszusammensetzung dadurch aus, dass sie wässrig und somit ökologisch unbedenklicher als herkömmliche, in hohen Anteilen organische Lösemittel enthaltende, Beschichtungszusammensetzungen ist.

Ferner wurde überraschend gefunden, dass sich die erfindungsgemäße Beschichtungszusammensetzung insbesondere auch bei höheren Temperaturen wie beispielsweise Temperaturen ≥40°C durch eine gute Lagerstabilität auszeichnet.

Die Begriffe "Kocher", "Nadelstiche", "Flop", "Stippen", "Sedimentation" sowie "Verlaufsstörungen" sind dem Fachmann bekannt und beispielsweise definiert im Römpp Lexikon, Lacke und Druckfarben, Georg Thieme Verlag 1998.

Der Begriff "umfassend" im Sinne der vorliegenden Erfindung, beispielsweise in Zusammenhang mit der erfindungsgemäßen Beschichtungszusammensetzung, hat in einer bevorzugten Ausführungsform die Bedeutung "bestehend aus". Dabei können in dieser bevorzugten Ausführungsform neben den Komponenten Wasser, (A), (B) und (C) gegebenenfalls zudem (D) und/oder (E) und/oder organische Lösemittel in der erfindungsgemäßen Beschichtungszusammensetzung enthalten sein. Alle Komponenten können jeweils in einer ihrer nachstehend genannten bevorzugten Ausführungsformen in der erfindungsgemäßen Beschichtungszusammensetzung enthalten sein.

Vorzugsweise addieren sich die Anteile in Gew.-% der in der erfindungsgemäßen Beschichtungszusammensetzung enthaltenen Komponenten Wasser, (A), (B) und (C) gegebenenfalls zudem (D) und/oder (E) und/oder organische Lösemittel auf 100 Gew.-%, bezogen auf das Gesamtgewicht der Beschichtungszusammensetzung.

## Beschichtungszusammensetzung

Die erfindungsgemäßen wässrigen Beschichtungszusammensetzungen enthalten als flüssiges Verdünnungsmittel Wasser.

Unter dem Begriff "wässrig" im Zusammenhang mit der erfindungsgemäßen Beschichtungszusammensetzung werden vorzugsweise solche flüssigen Beschichtungszusammensetzungen verstanden, die - als flüssiges Verdünnungsmittel, d.h. als flüssiges Lösemittel und/oder Dispergiermittel - Wasser als Hauptkomponente enthalten. Die erfindungsgemäßen wässrigen Beschichtungszusammensetzungen sind daher vorzugsweise im Wesentlichen frei von organischen Lösemitteln. Gegebenenfalls können die erfindungsgemäßen Beschichtungszusammensetzungen jedoch organische Lösemittel in bestimmten Anteilen enthalten. Als Beispiele für solche organischen Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Aceton, Isophoron oder Mischungen davon genannt. Vorzugsweise beträgt der Anteil dieser organischen Lösemittel höchstens 40,0 Gew.-%, besonders bevorzugt höchstens 35,0 Gew.-%, ganz besonders bevorzugt höchstens 30,0 Gew.-%, insbesondere höchstens 25,0 Gew.-%, jeweils bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln. In diesem Zusammenhang wird unter dem Ausdruck "im Wesentlichen frei von organischen Lösemitteln" im Zusammenhang mit der erfindungsgemäßen Beschichtungszusammensetzung entsprechend vorzugsweise verstanden, dass der Anteil an organischen Lösemitteln darin höchstens 40,0 Gew.-%, besonders bevorzugt höchstens 35,0 Gew.-%, ganz besonders bevorzugt höchstens 30,0 Gew.-%, insbesondere höchstens 25,0 Gew.-%, jeweils bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln, beträgt. Insbesondere wird unter dem Ausdruck "im Wesentlichen frei von organischen Lösemitteln" im Zusammenhang mit der erfindungsgemäßen Beschichtungszusammensetzung verstanden, dass der Anteil an organischen Lösemitteln darin höchstens in einem Bereich von 10,0 Gew.-% bis 35,0 Gew.-%, bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln, liegt. Vorzugsweise enthält die erfindungsgemäße Beschichungszusammensetzung höchstens 25 Gew.-%, besonders bevorzugt höchstens 20 Gew.-% an organischem Lösemittel oder an organischen Lösemitteln, bezogen auf das Gesamtgewicht der Beschichtungszusammensetzung.

Vorzugsweise ist die erfindungsgemäße Beschichtungszusammensetzung eine Basislackzusammensetzung, d.h. eine Beschichtungszusammensetzung, die sich zur Herstellung einer Basislackschicht eignet. Der Begriff "Basislack" ist dem Fachmann bekannt und beispielsweise definiert im Römpp Lexikon, Lacke und Druckfarben, Georg Thieme Verlag 1998.

Vorzugsweise weist die erfindungsgemäße Beschichtungszusammensetzung einen Festkörperanteil, d.h. einen Festkörpergehalt im Bereich von 10 bis 50 Gew.-%, besonders bevorzugt im Bereich von 15 bis 45 Gew.-%, ganz besonders bevorzugt im Bereich von 15 bis 50 Gew.-%" bezogen auf das Gesamtgewicht der Beschichtungszusammensetzung auf. Dem Fachmann sind Bestimmungsmetoden zur Ermittlung des Festkörper-Anteils bzw. des Festkörpergehalts, d.h. des nichtflüchtigen Anteils bekannt. Der nicht-flüchtige Anteil wird gemäß der nachstehend beschriebenen Bestimmungsmethode ermittelt.

**Bindemittel (A)**

Das in der erfindungsgemäßen wässrigen Beschichtungszusammensetzung eingesetzte Bindemittel (A) ist vorzugsweise ein in Wasser gelöstes oder dispergiertes Bindemittel.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile einer Beschichtungszusammensetzung mit Ausnahme von darin enthaltenen Pigmenten (B) und gegebenenfalls vorhandenen Füllstoffen verstanden, insbesondere die für die Filmbildung verantwortlichen polymeren Harze. Der nicht-flüchtige Anteil kann gemäß nachstehend beschriebener Methode bestimmt werden. Vom Begriff des Bindemittels (A) sind daher neben den polymeren Harzen (A1) vorzugsweise auch gegebenenfalls in der jeweiligen Beschichtungszusammensetzung vorhandene Vernetzungsmittel (A2) umfasst. Vorzugsweise ist das Verdickungsmittel (C) jedoch nicht vom Begriff des Bindemittels (A) umfasst.

Als polymere Harze (A1) eignen sich alle üblichen dem Fachmann bekannten polymeren Harze (A1) wie selbstvernetzende und nicht-selbstvernetzende polymere Harze (A1). Werden nicht-selbstvernetzende polymere Harze (A1) eingesetzt, so kann das erfindungsgemäß eingesetzte Bindemittel (A) zudem ein Vernetzungsmittel (A2) aufweisen. Geeignete polymere Harze (A1) einschließlich gegebenenfalls vorhandener Vernetzungsmittel (A2) sind beispielsweise aus EP 0 228 003 A1, DE 44 38 504 A1, EP 0 593 454 B1, DE 199 48 004 A1, EP 0 787 159 B1, DE 40 09 858 A1, DE 44 37 535 A1 und WO 2005/021168 A1, insbesondere aus EP 0 228 003 A1, DE 199 48 004 A1, DE 40 09 858 A1 und DE 44 37 535 A1 bekannt.

Vorzugsweise umfasst das Bindemittel (A) wenigstens ein polymeres Harz (A1), welches gegebenenfalls reaktive funktionelle Gruppen aufweist, die eine Vernetzungsreaktion ermöglichen.

Das polymere Harz (A1) ist vorzugsweise von dem zur Herstellung des erfindungsgemäß eingesetzten Verdickungsmittels (C) eingesetzten polymeren Harz (C1) verschieden, d.h. ist vorzugsweise kein Polyamid. Das polymere Harz (A1) kann von dem zur Herstellung des erfindungsgemäß eingesetzten Verdickungsmittels (C) eingesetzten polymeren Harz (C2) verschieden oder gleich sein. Beispielsweise kann ein Polyurethan als polymeres Harz (C2) sowohl zur Herstellung des Verdickungsmittels (C) als auch als polymeres Harz (A1) dienen.

Das polymere Harz (A1) des erfindungsgemäß eingesetzten Bindemittels (A) weist vorzugsweise vernetzbare reaktive funktionelle Gruppen auf. Jede übliche dem Fachmann bekannte vernetzbare reaktive funktionelle Gruppe kommt dabei in Betracht. Vorzugsweise weist das wenigstens eine polymere Harz des Bindemittels (A) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylatGruppen, und Epoxid-Gruppen auf. Vorzugsweise weist das polymere Harz (A1) des Bindemittels (A) funktionelle Hydroxyl-Gruppen auf.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Weist das polymere Harz (A1) des Bindemittels (A) vernetzbare funktionelle Gruppen wie Hydroxyl-Gruppen auf, so liegt der Anteil an vernetzbaren funktionellen Gruppen wie Hydroxyl-Gruppen vorzugsweise im Bereich von 0,1 Gew.-% bis 7,0 Gew.-%, besonders bevorzugt von 0,25 bis 6,5 Gew.-%, ganz besonders bevorzugt von 0,50 bis 6,0 Gew.-%, insbesondere von 0,75 bis 5,5 Gew.-%, jeweils bezogen auf das Gesamtgewicht des Festkörpergehalts des polymeren Harzes (A1) des Bindemittels (A) auf.

Das polymere Harz (A1) und das gegebenenfalls vorhandenen Vernetzungsmittel (A2) sind exotherm oder endotherm vernetzbar bzw. härtbar. Das polymere Harz (A1) und das gegebenenfalls vorhandene Vernetzungsmittel (A2) sind insbesondere thermisch vernetzbar bzw. härtbar. Vorzugsweise sind das polymere Harz (A1) und das gegebenenfalls vorhandene Vernetzungsmittel (A2) in einem Temperaturbereich von -20°C bis zu 250°C vernetzbar bzw. härtbar. Vorzugsweise sind das polymere Harz (A1) und das gegebenenfalls vorhandene Vernetzungsmittel (A2) bei Raumtemperatur oder bei Temperaturen im Bereich von 15°C bis 80°C vernetzbar. Unter Raumtemperatur wird im Sinne der vorliegenden Erfindung vorzugsweise eine Temperatur im Bereich von 18°C bis 23°C verstanden. Alternativ sind das polymere Harz (A1) und das gegebenenfalls vorhandene Vernetzungsmittel (A2) erst bei höheren Temperaturen vernetzbar, beispielsweise bei Temperaturen $\geq 80°C$, bevorzugter $\geq 110°C$, besonders bevorzugt $\geq 140°C$ oder $\geq 150°C$ vernetzbar. Besonders vorteilhaft sind das polymere Harz (A1) und das gegebenenfalls vorhandene Vernetzungsmittel (A2) bei 50 bis 150°C, noch bevorzugter bei 70 bis 150°C und besonders bevorzugt bei 80 bis 150°C vernetzbar.

Vorzugsweise umfasst das Bindemittel (A) wenigstens ein polymeres Harz (A1) ausgewählt aus der Gruppe bestehend aus Polyurethanen, Polyestern, Polyamiden, Polyharnstoffen, Polystyrolen, Polycarbonaten, Poly(meth)acrylaten, Vinylesterbasierten Harzen, Epoxidharzen, Phenol-Formaldehydharzen, Melamin-Formaldehydharzen, Phenolharzen und Silikonharzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch Copolymere verstanden. Diese Harze sowie ihre Herstellung sind dem Fachmann bekannt. Geeignete Polyester sind beispielsweise aus DE 40 09 858 A1 bekannt. Geeignete Polyurethane sind beispielsweise aus DE 199 48 004 A1 und aus EP 0 228 003 A1 bekannt. Der Begriff Polyurethane schließt vorzugsweise insbesondere Polyurethanpoly(meth)acrylate, d.h. polyurethanmodifizierte Poly(meth)acrylate mit ein. Solche Polyurethanpoly(meth)acrylate sind dem Fachmann beispielsweise aus DE 44 37 535 A1 bekannt.

Vorzugsweise umfasst das Bindemittel (A) wenigstens ein polymeres Harz (A1) ausgewählt aus der Gruppe bestehend aus Polyurethanen, Polyharnstoffen, Polyestern und Poly(meth)acrylaten, wobei vorzugsweise 70 bis 100 Gew.-% des polymeren Harzes des Bindemittels aus wenigstens einem der vorstehend genannten Polymeren ausgewählt sind.

Es können auch mehrere verschiedene polymere Harze (A1) im Bindemittel (A) vorhanden sein, beispielsweise zwei oder drei jeweils voneinander verschiedene polymere Harze (A1).

In einer besonders bevorzugten Ausführungsform umfasst das Bindemittel (A) als polymeres Harz (A1) wenigstens ein Polyurethan, wobei vorzugsweise 70 bis 100 Gew.-% des polymeren Harzes ein solches Polyurethan darstellen, und/oder als polymeres Harz (A1) wenigstens ein Poly(meth)acrylat, wobei vorzugsweise 70 bis 100 Gew.-% des polymeren Harzes aus einem solchen Poly(meth)acrylat ausgewählt sind, und/oder als polymeres Harz (A1) wenigstens einen Polyester, wobei vorzugsweise 70 bis 100 Gew.-% des polymeren Harzes aus einem solchen Polyester ausgewählt sind.

Das Bindemittel (A) kann ein polymeres Harz (A1) umfassen, welches unter Beteiligung von Isocyanat-Gruppen und/oder oligomerisierten oder polymerisierten Isocyanat-Gruppen ausgehärtet bzw. vernetzt wird, ganz besonders bevorzugt wenigstens ein entsprechendes Polyurethan und/oder einen Polyester und/oder ein Poly(meth)acrylat.

Umfasst das Bindemittel (A) wenigstens ein Polyurethan als polymeres Harz (A1), so eignen sich insbesondere Polyurethan-basierte Harze, die durch eine Polyadditionsreaktion zwischen hydroxylgruppenhaltigen Verbindungen wie Polyolen einschließlich Diolen (wie z.B. Hydroxylgruppen von hydroxylgruppenhaltigen Polyestern oder hydroxylgruppenhaltigen Polyethern sowie Mischungen und Copolymeren davon) und wenigstens einem Isocyanat oder Polyisocyanat (einschließlich aromatischer und aliphatischer Isocyanate, Di-, Tri- und/oder Polyisocyanate) hergestellt werden. Dabei ist üblicherweise ein stöchiometrischer Umsatz der OH-Gruppen der Polyole mit den Isocyanat-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Neben einer Reaktion von Isocyanat-Gruppen mit OH-Gruppen kann als weitere Reaktion zur Vernetzung z.B. auch die Di- und Trimerisierung von Isocyanaten (zu Uretdionen oder Isocyanuraten) auftreten. Als Polyisocyanate bzw. Isocyanate eignen sich alle als Vernetzungsmittel (A2) genannten einsetzbaren Isocyanate bzw. Polyisocyanate.

Umfasst das Bindemittel (A) wenigstens ein Polyurethan als polymeres Harz (A1), so eignet sich zu dessen Herstellung vorzugsweise ein Polyester-Polyol als Präpolymer-Polyol-Komponente. Als Polyester-Polyole eignen sich insbesondere solche Verbindungen, die sich von wenigstens einem Polyol wie wenigstens einem Diol, beispielsweise Ethylenglykol, Propylenglykol (1,2-Propandiol), Trimethylenglykol (1,3-Propandiol), Neopentylglykol, 1,4-Butandiol und/oder 1,6-Hexandiol, oder wie wenigstens einem Triol wie 1,1,1-Trimethylolpropan (TMP), und wenigstens einer Dicarbonsäure wie beispielsweise Adipinsäure, Terephthalsäure, Isophthalsäure, ortho-Phthalsäure und/oder Dimethylolpropionsäure und/oder wenigstens einem Dicarbonsäurederivat wie einem Dicarbonsäureester und/oder einem Dicarbonsäureanhydrid wie Phthalsäureanhydrid, ableiten. Insbesondere bevorzugt ist ein solches als Präpolymer-Polyol-Komponente eingesetztes Polyester-Polyol, welches sich von wenigstens einem Diol und/oder Triol ausgewählt aus der Gruppe bestehend aus 1,6-Hexandiol, Neopentylglycol, Trimethylolpropan und Mischungen davon, und wenigstens einer Dicarbonsäure (oder wenigstens einem Dicarbonsäurederivat davon) ausgewählt aus der Gruppe bestehend aus Adipinsäure, Terephthalsäure, Isophthalsäure, ortho-Phthalsäure Dimethylolpropionsäure und Mischungen davon, ableitet. Vorzugsweise wird wenigstens ein solches Polyester-Polyol mit wenigstens einem Vernetzungsmittel (A2), insbesondere mit wenigstens einem Polyisocyanat wie HDI oder IPDI zur Herstellung des Polyurethan-Harzes eingesetzt, welches vom Bindemittel (A) umfasst wird.

Um eine Lösung oder Dispersion eines solchen Polyurethan-Harzes und/oder Polyharnstoff-Harzes in Wasser zu ermöglichen, werden üblicherweise zur Stabilisierung der Dispersion in die Polyurethan-Kette bzw. Polyharnstoff-Kette ionische und/oder hydrophile Segmente eingebaut. Als Weichsegmente im Fall von Polyurethanen können bevorzugt 20 bis 100 mol % an höhermolekularen Diolen, bezogen auf die Menge aller Diole, bevorzugt Polyesterdiolen, mit einem zahlenmittleren Molekulargewicht $M_n$ von 500 bis 5000 g/mol, bevorzugt von 1000 bis 3000 g/mol eingesetzt werden. Die Bestimmung des zahlenmittleren Molekulargewichts erfolgt gemäß der nachstehend beschriebenen Methode.

Umfasst das Bindemittel (A) wenigstens ein Poly(meth)acrylat-basiertes polymeres Harz, so eignen sich zu deren Herstellung insbesondere Monomer- oder Oligomer-Gemische von Estern wie $C_{1-6}$-Alkyl-Estern der Acrylsäure und/oder der Methacrylsäure. Der Polymeraufbau erfolgt über die Umsetzung der C-C-Doppelbindungen dieser Monomere. Die Herstellung solcher Poly(meth)acrylatbasierter Harze kann durch eine radikalische Polymerisation erfolgen, die beispielsweise durch die Zersetzung organischer Peroxide initiiert wird.

Umfasst das Bindemittel (A) neben wenigstens einem polymeren Harz (A1) zudem wenigstens ein Vernetzungsmittel (A2), so eignen sich hierfür alle dem Fachmann bekannten üblichen Vernetzungsmittel wie beispielsweise Aminoplaste, Phenoplaste, polyfunktionelle Mannich-Basen, Melaminharze, Benzoguanamin-Harze, beta-Hydroxyalkylamide, Tris(alkoxycarbonylamino)triazine, Epoxide, freie Polyisocyanate und/oder blockierte Polyisocyanate, insbesondere blockierte Polyisocyanate, sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Ein besonders bevorzugtes Vernetzungsmittel ist ein blockiertes Polyisocyanat. Werden blockierte Polyisocyanate als Vernetzungsmittel gewählt, wird die erfindungsgemäße wässrige Beschichtungszusammensetzung vorzugsweise als 1-Komponenten-Zusammensetzung (1-K) formuliert. Werden unblockierte Polyisocyanate als Vernetzungsmittel gewählt, wird die erfindungsgemäße wässrige Beschichtungszusammensetzung vorzugsweise als 2-Komponenten-Zusammensetzung (2-K) formuliert.

Besonders bevorzugt eingesetzte Vernetzungsmittel (A2) einsetzbar sind in Wasser lösbare oder dispergierbare Melamin-Harze, vorzugsweise Melamin-Formaldehyd-Kondensationsprodukte, insbesondere veretherte Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten (methylierten) Melaminharze. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, $\omega,\omega'$-Diisocyanatodipropylether, Cyclobuten-1,3-diisocyanat, Cyclohexan-1,3- und -1,4-diisocyanat, 3-Isocyanato-methyl-3,5,5-trimethylcyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat (TDI), Perhydro-2,4'-diphenylmethandiisocyanat, Perhydro-4,4'-diphenylmethandiisocyanat ($H_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, $\omega,\omega'$-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Tetramethylxylylendiisocyanat (TMXDI), 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Als blockierte Polyisocyanate können beliebige Isocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert. Für die Blockierung der Isocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Die erfindungsgemäße wässrige Beschichtungszusammensetzung enthält vorzugsweise als Vernetzungsmittel (A2) wenigstens ein gegebenenfalls alkyliertes Melamin-Formaldehyd-Kondensationsprodukt.

Vorzugsweise ist das Vernetzungsmittel (A2) ein in Wasser gelöstes oder dispergiertes Vernetzungsmittel. Zur Beschleunigung der Vernetzung können der wässrigen Beschichtungszusammensetzung geeignete Katalysatoren zugesetzt werden. Auch solche Katalysatoren sind dem Fachmann bekannt.

Die erfindungsgemäße wässrige Beschichtungszusammensetzung weist vorzugsweise einen Festkörpergehalt an dem wenigstens einen Bindemittel (A) in einem Bereich von 10 bis 60 Gew.-%, besonders bevorzugt von 15 bis 40 Gew.-%, ganz besonders bevorzugt von 20 bis 35 Gew.-% auf, jeweils bezogen auf das Gesamtgewicht der wässrigen Beschichtungszusammensetzung.

Vorzugsweise enthält die erfindungsgemäße wässrige Beschichtungszusammensetzung das Vernetzungsmittel (A2) in einer Menge von 5 bis 40 Gew.-%, vorzugsweise in einer Menge von 10 bis 35 Gew.-%, besonders bevorzugt in einer Menge von 15 bis 30 Gew.-%, bezogen auf das Gesamtgewicht der polymeren Harze (A1) in der Beschichtungszusammensetzung. Die Mengenangaben sind dabei jeweils auf den jeweiligen Festkörpergehalt bezogen.

**Pigment (B)**

Die erfindungsgemäße Beschichtungszusammensetzung enthält wenigstens ein Pigment (B).

Vorzugsweise liegt das Pigment (B) als ein in Wasser gelöstes oder dispergiertes Pigment (B) vor.

Als Pigment (B) eignen sich insbesondere organische und/oder anorganische, farbgebende und/oder füllende Pigmente und insbesondere solche Pigmente, die vorzugsweise mindestens zwei dieser Eigenschaften aufweisen.

In einer bevorzugten Ausführungsform ist das Pigment (B) ein Effektpigment oder eine Mischung aus wenigstens einem Effektpigment und wenigstens einem davon unterschiedlichen Pigment, welches selbst kein Effektpigment ist und welches vorzugsweise aus der Gruppe bestehend aus organischen und anorganischen, farbgebenden und füllenden Pigmenten und Pigmenten, die vorzugsweise mindestens zwei dieser Eigenschaften aufweisen, ausgewählt ist.

Ein Fachmann ist mit dem Begriff der Effektpigmente vertraut. Eine entsprechende Definition findet sich beispielsweise im Römpp Lexikon Lacke und Druckfarben, Georg Thieme Verlag, 1998. Vorzugsweise handelt es sich bei Effektpigmenten um solche Pigmente, die optisch effektgebend oder farb- und optisch effektgebend, insbesondere optisch effektgebend sind. Eine entsprechende Einteilung der Pigmente erfolgt nach DIN 55945 (Datum: Dezember 2011).

Vorzugsweise ist das Pigment (B) ausgewählt aus der Gruppe bestehend aus gegebenenfalls beschichteten organischen und anorganischen Effektpigmenten.

Besonders bevorzugt ist das Pigment (B) ausgewählt aus der Gruppe bestehend aus gegebenenfalls beschichteten Metalleffektpigmenten, gegebenenfalls beschichteten Metalloxideffektpigmenten, gegebenenfalls beschichtete Effektpigmente, die aus Metallen und Nichtmetallen zusammengesetzt sind, und gegebenenfalls beschichteten nichtmetallischen Effektpigmenten.

Ganz besonders bevorzugt ist das Pigment (B) ausgewählt aus der Gruppe bestehend aus Metalleffektpigmenten, silikatbeschichteten Metalleffektpigmenten, und gegebenenfalls beschichteten nichtmetallischen Effektpigmenten wie Perlglanzpigmenten, insbesondere Mica-Pigmenten. Insbesondere bevorzugt ist das Pigment (B) ausgewählt aus der Gruppe bestehend aus Metalleffektpigmenten und silikatbeschichteten Metalleffektpigmenten.

Bevorzugte Metalleffektpigmente sind beispielsweise Aluminiumeffektpigmente, Eiseneffektpigmente oder Kupfereffektpigmente. Ganz besonders bevorzugt sind gegebenenfalls beschichtete - wie beispielsweise silanisierte und/oder chromatierte - Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan.

Die erfindungsgemäß eingesetzten Effektpigmente (B) können dabei in jeder üblichen dem Fachmann bekannten Form wie z.B. einer Blättchen- und/oder einer Plättchenform, insbesondere einer (Corn)flake- oder einer Silverdollar-Form vorliegen.

Beispiele für aus Metallen und Nichtmetallen zusammengesetzten Effektpigmente sind mit Eisenoxid beschichtete Aluminiumpigmente, wie sie beispielsweise in der europäischen Patentanmeldung EP 0 562 329 A2 beschrieben werden, Glasblättchen, die mit Metallen, insbesondere Aluminium, beschichtet sind, oder Interferenzpigmente, die eine Reflektorschicht aus Metall, insbesondere Aluminium, enthalten.

Beispiele für nichtmetallische Effektpigmente sind Perlglanzpigmente, insbesondere Micapigmente, mit Metalloxiden beschichtete, beispielsweise plättchenförmige Graphitpigmente, Interferenzpigmente, die keine Reflektorschicht aus Metall enthalten und einen starken Farbflop aufweisen; Effektpigmente auf der Basis von Eisenoxid; oder organische, flüssigkristalline Effektpigmente.

Ergänzend wird hinsichtlich der als Pigment (B) erfindungsgemäß vorzugsweise eingesetzten Effektpigmente auf das Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Als Pigment (B) geeignete Pigmente, welche keine Effektpigmente sind, sind vorzugsweise aus der Gruppe bestehend aus organischen und anorganischen, farbgebenden und füllenden Pigmenten, sowie Pigmenten, die vorzugsweise mindestens zwei dieser Eigenschaften aufweisen, und Nanopartikeln ausgewählt. Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen. Vorzugsweise werden die Nanopartikel aus der Gruppe bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt. Vorzugsweise handelt es sich bei den Verbindungen der Metalle um die Oxide, Oxidhydrate, Sulfate oder Phosphate. Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet. Vorzugsweise weisen die zu Nanopartikel eine mittlere Primärpartikelgröße < 50 nm, bevorzugt 5 bis 50 nm, insbesondere 10 bis 30 nm, auf. Die Primärpartikelgröße wird dabei vorzugsweise mittels Laserbeugung bestimmt, besonders bevorzugt mittels Lasergranulometrie gemäß ISO 13320-1 (Datum: September 2009).

Der Gehalt des erfindungsgemäß eingesetzten Pigments (B) in der erfindungsgemäßen Beschichtungszusammensetzung kann je nach Verwendungszweck der betreffenden pigmentierten Beschichtungszusammensetzung sehr breit variieren. Vorzugsweise liegt der Gehalt an Pigment (B), bezogen auf die erfindungsgemäße Beschichtungszusammensetzung bei 0,1 bis 80 Gew.-%, bevorzugt bei 0,5 bis 70 Gew.-%, besonders bevorzugt bei 1,0 bis 60 Gew.-%, ganz besonders bevorzugt bei 1,5 bis 50 Gew.-% und insbesondere bei 2,0 bis 40 Gew.-%.

## Verdickungsmittel (C)

Die erfindungsgemäße Beschichtungszusammensetzung enthält wenigstens ein Verdickungsmittel (C), welches erhältlich ist durch ein Verfahren umfassend wenigstens die Schritte (1), (2), (3) und (4), nämlich

(1) Herstellen einer Dispersion oder Lösung wenigstens eines polymeren Harzes (C2) in wenigstens einem organischen Lösemittel, wobei das polymere Harz (C2) ein Polyurethan ist,
(2) Herstellen einer Mischung aus der nach Schritt (1) erhaltenen Dispersion oder Lösung und einer Schmelze oder Lösung wenigstens eines Polyamids als wenigstens ein polymeres Harz (C1), welches eine Säure-Zahl in einem Bereich von 1 bis 200 mg KOH pro g an (C1) aufweist,
(3) Zugeben von Wasser zu der nach Schritt (2) erhaltenen Mischung und
(4) Entfernen des organischen Lösemittels aus der nach Schritt (3) erhaltenen Mischung unter Erhalt der wässrigen Dispersion des wenigstens einen Verdickungsmittels (C).

Der Blend ist in diesem Fall somit vorzugsweise ein entsprechender Polymer-Blend. Der Begriff "Blend" bzw. "Polymer-Blend" ist dem Fachmann bekannt, beispielsweise aus dem Römpp Chemie Lexikon 1995, Thieme Verlag.

Vorzugsweise liegt das relative Gewichtsverhältnis von (C1) zu (C2) zueinander, jeweils bezogen auf deren Festkörpergehalt, im Bereich von 1:15 bis 1:1, besonders bevorzugt im Bereich von 1:10 bis 1:1,5, ganz besonders bevorzugt im Bereich von 1:10 bis 1:1,7.

Vorzugsweise umfasst das Verfahren zudem einen Schritt (2a), der zwischen den Schritten (2) und (3) durchgeführt wird, nämlich eine zumindest teilweise Neutralisation des nach Schritt (2) erhaltenen Zwischenprodukts durch die Zugabe wenigstens eines Neutralisationsmittels wie beispielsweise wenigstens eines geeigneten gegebenenfalls OH-Gruppen aufweisenden Amins, welches zum Beispiel 1 bis 12 Kohlenstoffatome tragen kann. Ein Beispiel eines solchen Amins ist Dimethylethanolamin. Alternativ kann eine solche vorzugsweise zumindest teilweise Neutralisation des nach Schritt (2) erhaltenen Zwischenprodukts auch innerhalb des Schritts (3) dadurch erfolgen, dass in Schritt (3) neben Wasser zudem wenigstens ein Neutralisationsmittel zu der nach Schritt (2) erhaltenen Mischung gegeben wird.

In Schritt (1) kann grundsätzlich jedes geeignete organische Lösemittel eingesetzt werden. Als Beispiele für solche organischen Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon (MEK), Methylisobutylketon (MIBK), Aceton, Isophoron oder Mischungen davon genannt, insbesondere Methylethylketon (MEK) und/oder Methylisobutylketon (MIBK).

Schritt (1) und/oder Schritt (2) und/oder Schritt (2a) wird vorzugsweise bei einer Temperatur im Bereich von 60 bis 180°C durchgeführt, insbesondere bei einer Temperatur im Bereich von 90 bis 150°C.

Vorzugsweise wird in Schritt (2) die nach Schritt (1) erhaltene Dispersion oder Lösung vorgelegt und zu dieser die Schmelze oder Lösung, vorzugsweise Schmelze, des wenigstens einen polymeren Harzes (C1), d.h. des Polyamids (C1) gegeben. Alternativ kann auch die Schmelze oder Lösung, vorzugsweise Schmelze, des wenigstens einen polymeren Harzes (C1), d.h. des Polyamids (C1), vorgelegt werden, und zu dieser die nach Schritt (1) erhaltene Dispersion oder Lösung gegeben werden.

In Schritt (3) wird vorzugsweise deionisiertes Wasser eingesetzt. Die nach Schritt (3) erhaltene Mischung ist vorzugsweise eine Dispersion. Diese Dispersion kann mit jeder dem Fachmann bekannten üblichen Dispergierart erzeugt werden. Vorzugsweise erfolgt Schritt (3) mittels Rühren, besonders bevorzugt mittels Hochleistungsdispergieren wie beispielsweise einem entsprechenden Ultra-Turrax-Gerät der Firma IKA. Gegebenenfalls kann in Schritt (3) neben Wasser zudem wenigstens ein Neutralisationsmittel zu der nach Schritt (2) erhaltenen Mischung gegeben werden, insbesondere dann, wenn kein separater Schritt (2a) durchgeführt wird.

Schritt (4) kann beispielsweise durch Anlegen eines verminderten Drucks oder durch Abdestillieren bei erhöhter Temperatur und/oder im Vakuum erfolgen. Die nach Schritt (4) erhaltene wässrige Dispersion des Verdickungsmittels (C) kann gegebenenfalls aufgrund der in Schritt (1) eingesetzten lösemittelhaltigen Dispersion oder Lösung einen geringen Anteil an organischem Lösemittel wie beispielsweise MEK und/oder MIBK enthalten, der jedoch vorzugsweise höchstens in einem Bereich von 0,2 bis 1,5 Gew.-%, noch bevorzugter von 0,2 bis 1,0 Gew.-%, besonders bevorzugt von 0,2 bis 0,6 Gew.-%, jeweils bezogen auf das Gesamtgewicht der wässrigen Dispersion des Verdickungsmittels (C), liegt.

Das in Schritt (2) eingesetzte Polyamid (C1) wird dabei vorzugsweise gemäß einem Schritt (0) erhalten, nämlich durch

(0) Umsetzung wenigstens einer Polycarbonsäure (C1a), vorzugsweise wenigstens einer Polycarbonsäure ausgewählt aus der Gruppe bestehend aus aliphatischen $C_3$-$C_{22}$-Dicarbonsäuren, Polymeren wie Dimeren und Trimeren von aliphatischen $C_{14}$-$C_{22}$-Monocarbonsäuren, und Mischungen davon, mit wenigstens einem Polyamin (C1b), vorzugsweise mit wenigstens einem aliphatischen $C_2$-$C_{12}$-Diamin (C1b),

wobei das nach Schritt (0) erhaltene Umsetzungsprodukt gegebenenfalls im Anschluss mit wenigstens einem vorzugsweise basischen Neutralisationsmittel kontaktiert wird. Vorzugsweise erfolgt diese Kontaktierung mit wenigstens einem vorzugsweise basischen Neutralisationsmittel.

Vorzugsweise weist die erfindungsgemäße Beschichtungszusammensetzung einen Festkörpergehalt an dem wenigstens einen Verdickungsmittel (C) in einem Bereich von 0,1 bis 20 Gew.-% auf, besonders bevorzugt von 0,35 bis 15 Gew.-%, ganz besonders bevorzugt von 0,75 bis 10 Gew.-%, insbesondere von 1,0 bis 9,0 Gew.-%, jeweils bezogen auf das Gesamtgewicht der Beschichtungszusammensetzung.

Vorzugsweise enthält das Verdickungsmittel (C) das wenigstens eine Polyamid (C1) in einer Menge in einem Bereich von 10 bis 50 Gew.-% und das wenigstens eine weitere Polymer (C2) in einer Menge in einem Bereich von 50 bis 90 Gew.-%, bezogen auf das Gesamtgewicht des Verdickungsmittels. Besonders bevorzugt enthält das Verdickungsmittel (C) das wenigstens eine Polyamid (C1) in einer Menge in einem Bereich von 10 bis 40 Gew.-% und das wenigstens eine weitere Polymer (C2) in einer Menge in einem Bereich von 60 bis 90 Gew.-%, bezogen auf das Gesamtgewicht des Verdickungsmittels. Die Mengen beziehen sich dabei jeweils auf den Festkörper.

Das erfindungsgemäße eingesetzte Verdickungsmittel (C) weist vorzugsweise einen Schmelzpunkt im Bereich von 20°C bis 100°C, besonders bevorzugt in einem Bereich von 25°C bis 80°C auf.

*Polyamid (C1)*

Vorzugsweise ist das erfindungsgemäße eingesetzte Polyamid (C1) erhältlich durch Umsetzung wenigstens einer Polycarbonsäure (C1a) mit wenigstens einem Polyamin (C1b), vorzugsweise gemäß vorstehend beschriebenem Schritt (0).

Unter dem Begriff "Polycarbonsäure" sind im Sinne der vorliegenden Erfindung vorzugsweise auch entsprechende zur Herstellung des Polyamids (C1) einsetzbare Polycarbonsäure-Derivate wie beispielsweise entsprechende Polycarbonsäure-Ester und/oder Polycarbonsäure-Anhydride mit eingeschlossen.

Unter dem Begriff "Polycarbonsäure" (C1a) wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist. Besonders bevorzugt weist die Polycarbonsäure 2 oder 3 Carboxyl-Gruppen auf. Bei Polycarbonsäuren mit zwei Carboxyl-Gruppen handelt es sich um Dicarbonsäuren und bei Polycarbonsäuren mit drei Carboxyl-Gruppen handelt es sich um Tricarbonsäuren. Die erfindungsgemäß eingesetzten Polycarbonsäuren (C1a) können aromatisch, teilaromatisch, cycloaliphatisch, teilcycloaliphatisch oder aliphatisch sein, vorzugsweise aliphatisch sein. Vorzugsweise weisen die erfindungsgemäß eingesetzten Polycarbonsäuren (C1a) 4 bis 66 Kohlenstoffatome pro Molekül auf.

Besonders bevorzugt ist die zur Herstellung des erfindungsgemäß eingesetzten Polyamids (C1) eingesetzte Polycarbonsäure (C1a) ausgewählt aus der Gruppe bestehend aus aliphatischen $C_3$-$C_{22}$-Dicarbonsäuren, Polymeren, insbesondere Dimeren und Trimeren, von aliphatischen $C_{14}$-$C_{22}$-Monocarbonsäuren, und Mischungen davon. Ganz besonders bevorzugt ist die zur Herstellung des erfindungsgemäß eingesetzten Polyamids (C1) eingesetzte Polycarbonsäure (C1a) ausgewählt aus der Gruppe bestehend aus aliphatischen $C_3$-$C_{22}$-Dicarbonsäuren, Dimeren von aliphatischen $C_{14}$-$C_{22}$-Monocarbonsäuren, und Mischungen davon.

Unter dem Begriff "aliphatische $C_3$-$C_{22}$-Dicarbonsäure" wird im Sinne der vorliegenden Erfindung vorzugsweise eine gesättigte oder ungesättigte, vorzugsweise gesättigte, aliphatische $C_3$-$C_{22}$-Dicarbonsäure mit insgesamt 3-22, d.h. 3, 4, 5, 6, 7, 8, 9, 10, 11, 12, 13, 14, 15, 16, 17, 18, 19, 20, 21 oder 22 Kohlenstoffatomen, vorzugsweise eine aliphatische $C_3$-$C_{20}$-Dicarbonsäure mit insgesamt 3 bis 20, d.h. 3, 4, 5, 6, 7, 8, 9, 10, 11, 12, 13, 14, 15, 16, 17, 18, 19, oder 20 Kohlenstoffatomen, verstanden, die jeweils genau zwei -C(=O)-OH-Gruppen aufweisen, d.h. beispielsweise eine aliphatische $C_3$-$C_{22}$-Dicarbonsäure, die neben diesen zwei -C(=O)-OH-Gruppen einen $C_1$-$C_{20}$-aliphatischen Rest mit insgesamt 1 bis 20 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dem Fachmann ist klar, dass, eine ungesättigte Bindung innerhalb der $C_3$-$C_{22}$-Dicarbonsäure dabei erst ab $C_4$-$C_{22}$-Dicarbonsäuren möglich ist. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatischen $C_3$-$C_{22}$-Dicarbonsäure können natürliche oder synthetisch erzeugte Dicarbonsäuren sein. Die aliphatischen $C_3$-$C_{22}$-Dicarbonsäure können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-$C_{1-4}$-aliphatischen Resten, =O, $NH_2$, NH($C_{1-4}$-aliphatischen Resten), N($C_{1-4}$-aliphatischen Resten), wobei die Substitution an gleichen oder an verschiedenen Kohlenstoffatomen erfolgen kann. Vorzugsweise sind aliphatische $C_3$-$C_{22}$-Dicarbonsäuren ausgewählt aus der Gruppe bestehend aus Malonsäure, Bernsteinsäure, Glutarsäure, Adipinsäure, Pimelinsäure, Suberinsäure, Azelainsäure, Sebacinsäure, Undecandicarbonsäure, Dodecandicarbonsäure, Tridecandicarbonsäure, Tetradecandicarbonsäure und Hexadecandicarbonsäure.

Unter dem Begriff "aliphatische $C_{14}$-$C_{22}$-Monocarbonsäure" wird im Sinne der vorliegenden Erfindung vorzugsweise eine gesättigte oder ungesättigte, vorzugsweise ungesättigte, aliphatische $C_{14}$-$C_{22}$-Monocarbonsäure mit insgesamt 14-22, d.h. 14, 15, 16, 17, 18, 19, 20, 21 oder 22 Kohlenstoffatomen, vorzugsweise eine aliphatische $C_{16}$-$C_{20}$-Monocarbonsäure mit insgesamt 16-20, d.h. 16, 17, 18, 19 oder 20 Kohlenstoffatomen, verstanden, die jeweils genau eine -C(=O)-OH-Gruppe aufweist, d.h. eine aliphatische $C_{14}$-$C_{22}$-Monocarbonsäure, die neben dieser einen - C(=O)-OH-Gruppe einen $C_{13}$-$C_{21}$-aliphatischen Rest mit insgesamt 13-21, d.h. 13, 14, 15, 16, 17, 18, 19, 20 oder 21 Kohlenstoffatomen, vorzugsweise einen $C_{15}$-$C_{19}$-aliphatischen Rest mit insgesamt 15-19, d.h. 15, 16, 17, 18 oder 19 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatische $C_{14}$-$C_{22}$-Monocarbonsäure können natürliche oder synthetisch erzeugte Fettsäuren sein. Die aliphatischen $C_{14}$-$C_{22}$-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-$C_{1-4}$-aliphatischen Resten, =O, $NH_2$, NH($C_{1-4}$-aliphatischen Resten), N($C_{1-4}$-aliphatischen Resten), wobei die Substitution an gleichen oder an verschiedenen Kohlenstoffatomen erfolgen kann. Vorzugsweise sind aliphatische $C_{14}$-$C_{22}$-Monocarbonsäure ausgewählt aus der Gruppe bestehend aus Myristinsäure, Pentadecansäure, Palmitinsäure, Margarinsäure, Stearinsäure, Nonadecansäure, Arachinsäure, Henicosansäure, Docosansäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Linolsäure, Linolensäure, Calendulasäure, Punicinsäure, Elaeostearinsäure, Arachidonsäure, Timnodonsäure, Clupanodonsäure und Cervonsäure. Vorzugsweise sind aliphatische $C_{16}$-$C_{20}$-Monocarbonsäuren ausgewählt aus der Gruppe bestehend aus Palmitinsäure, Margarinsäure, Stearinsäure, Nonadecansäure, Arachinsäure, Palmitoleinsäure, Petroselinsäure, Ölsäure, Elaidinsäure, Vaccensäure, Gadoleinsäure, Icosensäure, Linolsäure, Linolensäure, Calendulasäure, Punicinsäure, Elaeostearinsäure, Arachidonsäure und Timnodonsäure. Vorzugsweise sind aliphatische $C_{18}$-Monocarbonsäure ausgewählt aus der Gruppe bestehend aus Stearinsäure, Petroselinsäure, Ölsäure, Elaidinsäure, Vaccensäure, Linolsäure, Linolensäure, Calendulasäure, Punicinsäure und Elaeostearinsäure, insbesondere ausgewählt aus der Gruppe bestehend aus Stearinsäure, Ölsäure, Linolsäure und Linolensäure, am meisten bevorzugt ausgewählt aus der Gruppe bestehend aus Ölsäure, Linolsäure und Linolensäure.

Dem Fachmann sind Herstellungsverfahren zur Bereitstellung von Polymeren, insbesondere Dimeren und Trimeren, von aliphatischen $C_{14}$-$C_{22}$-Monocarbonsäuren, d.h. zur Bereitstellung von polymerisierten aliphatischen $C_{14}$-$C_{22}$-Monocarbonsäuren, wie beispielsweise dimerisierten, trimerisierten und höher polymerisierten aliphatischen $C_{14}$-$C_{22}$-Monocarbonsäuren bekannt, beispielsweise aus DE 25 06 211 A1, US 2,793,219 A und US 2,955,121 A. Die polymerisierten aliphatischen $C_{14}$-$C_{22}$-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-$C_{1-4}$-aliphatischen Resten, =O, $NH_2$, $NH(C_{1-4}$-aliphatischen Resten), $N(C_{1-4}$-aliphatischen Resten), wobei die Substitution an gleichen oder an verschiedenen Kohlenstoffatomen erfolgen kann. Als Ausgangsmaterial zur Herstellung solcher polymerisierter aliphatischer $C_{14}$-$C_{22}$-Monocarbonsäuren werden wenigstens einfach ungesättigte aliphatische $C_{14}$-$C_{22}$-Monocarbonsäuren eingesetzt. Die erhaltenen polymerisierten wie dimerisierten und trimerisierten aliphatischen $C_{14}$-$C_{22}$-Monocarbonsäuren können jeweils mittels Destillation voneinander und zudem jeweils von höherwertigen Polymerisationsprodukten abgetrennt werden und gegebenenfalls weiteren Umsetzungsreaktionen wie beispielsweise Hydrierungen unterworfen werden.

Unter dem Begriff "Polyamin" (C1b) wird im Sinne der vorliegenden Erfindung vorzugsweise eine Verbindung verstanden, welche wenigstens zwei vorzugsweise endständige primäre Amino-Gruppen aufweist. Insgesamt kann ein Polyamin jedoch bis zu einschließlich 10 Amino-Gruppen aufweisen, d.h. zusätzlich zu den wenigstens zwei primären Amino-Gruppen noch bis zu einschließlich 8 weitere, Amino-Gruppen enthalten, bei denen es sich vorzugsweise um primäre oder sekundäre Amino-Gruppen handelt. Ein "Polyamin" im Sinne der vorliegenden Erfindung kann ein (hetero)aliphatisches, (hetero)cycloaliphatisches oder (hetero)aromatisches Polyamin sein. Vorzugsweise ist das Polyamin ein Diamin oder Triamin, besonders bevorzugt ein Diamin. Vorzugsweise weisen die erfindungsgemäß eingesetzten Polyamine (C1b) 2 bis 20, besonders bevorzugt 2 bis 12, Kohlenstoffatome pro Molekül auf. Das Polyamin kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-$C_{1-4}$-aliphatischen Resten, =O, $NH_2$, $NH(C_{1-4}$-aliphatischen Resten), $N(C_{1-4}$-aliphatischen Resten), wobei die Substitution an gleichen oder an verschiedenen Kohlenstoffatomen erfolgen kann.

Besonders bevorzugt ist das zur Herstellung des erfindungsgemäß eingesetzten Polyamids (C1) eingesetzte Polyamin (C1b) ausgewählt aus der Gruppe bestehend aus aliphatischen $C_2$-$C_{20}$-Diaminen. Ganz besonders bevorzugt ist das zur Herstellung des erfindungsgemäß eingesetzten Polyamids (C1) eingesetzte Polyamin (C1b) ausgewählt aus der Gruppe bestehend aus aliphatischen $C_2$-$C_{12}$-Diaminen.

Unter dem Begriff "aliphatisches $C_2$-$C_{20}$-Diamin" wird im Sinne der vorliegenden Erfindung vorzugsweise ein gesättigtes oder ungesättigtes, vorzugsweise ein gesättigtes, aliphatisches $C_2$-$C_{20}$-Diamin mit insgesamt 2-20, d.h. 2, 3, 4, 5, 6, 7, 8, 9, 10, 11, 12, 13, 14, 15, 16, 17, 18, 19, oder 20, Kohlenstoffatomen, vorzugsweise ein aliphatisches $C_2$-$C_{12}$-Diamin mit insgesamt 2-12, d.h. 2, 3, 4, 5, 6, 7, 8, 9, 10, 11 oder 12 Kohlenstoffatomen, verstanden, das jeweils genau zwei vorzugsweise endständige -$NH_2$-Gruppen aufweist. Der Ausdruck "aliphatisch" umfasst dabei vorzugsweise acyclische gesättigte oder ungesättigte, vorzugsweise gesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Das aliphatische $C_2$-$C_{20}$-Diamin kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-$C_{1-4}$-aliphatischen Resten, =O, $NH_2$, $NH(C_{1-4}$-aliphatischen Resten), $N(C_{1-4}$-aliphatischen Resten), wobei die Substitution an gleichen oder an verschiedenen Kohlenstoffatomen erfolgen kann. Vorzugsweise sind die aliphatischen $C_2$-$C_{20}$-Diamine ausgewählt aus der Gruppe bestehend aus Ethylendiamin, 1,3-Diaminopropan, 1,4-Diaminobutan, 1,5-Diaminopentan, 1,6-Diaminohexan (Hexamethylendiamin), 1,7-Diaminoheptan, 1,8-Diaminoctan (Octamethylendiamin), 1,9-Diaminononan, 1,10-Diaminodecan, 1,11-Diaminoundecan und 1,12-Diamino-dodecan.

Vorzugsweise ist das Polyamid (C1) erhältlich durch Umsetzung wenigstens einer Polycarbonsäure (C1a) ausgewählt aus der Gruppe bestehend aus aliphatischen $C_3$-$C_{22}$-Dicarbonsäuren, Polymeren wie Dimeren und Trimeren von aliphatischen $C_{14}$-$C_{22}$-Monocarbonsäuren, und Mischungen davon, mit wenigstens einem aliphatischen $C_2$-$C_{12}$-Diamin (C1b).

Vorzugsweise wird die Umsetzung wenigstens einer Polycarbonsäure (C1a) und wenigstens eines Polyamins (C1b) in einem vorzugsweise organischen Lösemittel durchgeführt.

Vorzugsweise werden zur Herstellung des Polyamids (C1) pro Amino-Gruppe des als Komponente (C1b) eingesetzten Polyamins, insbesondere des aliphatischen $C_2$-$C_{12}$-Diamins, wenigstens 1,0 Mol, besonders bevorzugt wenigstens 1,1 Mol, ganz besonders bevorzugt wenigstens 1,2 Mol oder wenigstens 1,4 Mol an Polycarbonsäure (C1a), insbesondere an Polycarbonsäure (C1a) ausgewählt aus der Grupp bestehend aus aliphatischen $C_3$-$C_{22}$-Dicarbonsäuren und Dimeren von aliphatischen $C_{14}$-$C_{22}$-Monocarbonsäuren, eingesetzt.

Werden beispielsweise 1 Mol eines aliphatischen $C_2$-$C_{12}$-Diamins als Komponente (C1b) eingesetzt, so werden in diesem Fall wenigstens 1,0 Mol, besonders bevorzugt wenigstens 1,1 Mol, ganz besonders bevorzugt wenigstens 1,2 Mol oder wenigstens 1,4 Mol an, an Polycarbonsäure (C1a) ausgewählt aus der Gruppe bestehend aus aliphatischen $C_3$-$C_{22}$-Dicarbonsäuren und Dimeren von aliphatischen $C_{14}$-$C_{22}$-Monocarbonsäuren zur Herstellung des Polyamids (C1) eingesetzt. Das Polyamid (C1) weist eine Säure-Zahl in einem Bereich von 1 bis 200 mg, besonders bevorzugt von 20 bis 120 mg, ganz besonders bevorzugt von 30 bis 100 mg KOH pro g an (C1) auf. Dem Fachmann sind Bestimmungsmetoden zur Ermittlung der Säure-Zahl bekannt. Vorzugsweise wird die Säure-Zahl gemäß DIN EN ISO 2114 (Datum: Juni 2002) bestimmt.

Die Säure-Zahl der erfindungsgemäß eingesetzten Polyamide (C1) kann insbesondere durch Kontaktieren und Reaktion des nach der Umsetzung erhaltenen Polyamids (C1) mit wenigstens einem Neutralisationsmittel gesteuert und eingestellt werden, vorzugsweise über die Menge des eingesetzten Neutralisationsmittels. Entsprechende geeignete vorzugsweise basische Neutralisationsmittel sind dem Fachmann bekannt. Ein bevorzugtes Neutralisationsmittel ist ein Aminoalkohol, besonders bevorzugt eignet sich Dimethylethanolamin (DMEA).

Vorzugsweise ist das Polyamid (C1) erhältlich durch ein Verfahren umfassend wenigstens den Schritt (0), nämlich

(0) durch Umsetzung wenigstens einer Polycarbonsäure (C1a), vorzugsweise wenigstens einer Polycarbonsäure ausgewählt aus der Gruppe bestehend aus aliphatischen $C_3$-$C_{22}$-Dicarbonsäuren, Polymeren wie Dimeren und Trimeren von aliphatischen $C_{14}$-$C_{22}$-Monocarbonsäuren, und Mischungen davon, mit wenigstens einem Polyamin (C1b), vorzugsweise mit wenigstens einem aliphatischen $C_2$-$C_{12}$-Diamin (C1b),

wobei das nach Schritt (0) erhaltene Umsetzungsprodukt gegebenenfalls im Anschluss mit wenigstens einem vorzugsweise basischen Neutralisationsmittel kontaktiert wird. Dabei kann die Säure-Zahl des nach Schritt (0) erhaltenen Umsetzungsprodukts durch Reaktion freier Carboxyl-Gruppen mit dem Neutralisationsmittel eingestellt bzw. verringert werden. Vorzugsweise wird das wenigstens eine Neutralisationsmittel in einer solchen Menge eingesetzt, dass 60 bis 90 mol-%, besonders bevorzugt 70 bis 90 mol-% oder 75 bis 85 mol-%, der freien Carboxyl-Gruppen neutralisiert werden.

Vorzugsweise weist das erfindungsgemäße eingesetzte Polyamid (C1) ein zahlenmittleres Molekulargewicht in einem Bereich von 500 g/mol bis 20 000 g/mol auf. Dem Fachmann sind Methoden zur Bestimmung des zahlenmittleren Molekulargewichts bekannt. Die Bestimmung des zahlenmittleren Molekulargewichts erfolgt gemäß der nachstehend beschriebenen Methode.

Das erfindungsgemäße eingesetzte Polyamid (C1) weist vorzugsweise einen Schmelzpunkt im Bereich von 80°C bis 180°C, besonders bevorzugt in einem Bereich von 100°C bis 170°C, ganz besonders bevorzugt im Bereich von 120°C bis 160°C auf.

*Polymer (C2)*

Als polymeres Harz (C2), welches zur Herstellung des Verdickungsmittels (C) eingesetzt wird, wird ein polymeres Harz ausgewählt aus der Gruppe bestehend aus Polyurethanen eingesetzt. Als Polyurethane zur Herstellung des Verdickungsmittels (C) können die gleichen entsprechenden Polymere eingesetzt werden, die auch zur Herstellung des polymeren Harzes (A1) geeignet sind.

Vorzugsweise weist das Polyurethan eine Säure-Zahl in einem Bereich von 1 bis 30 mg KOH pro g an (C2) auf.

Als Komponente (C2) einsetzbare Poylurethane sind beispielsweise in EP 0 228 003 A1 beschrieben.

**Weiteres Verdickungsmittel (D)**

Die erfindungsgemäße Beschichtungszusammensetzung kann gegebenenfalls wenigstens ein weiteres von der Komponente (C) verschiedenes Verdickungsmittel (D) umfassen wie beispielsweise wenigstens ein Verdickungsmittel (D) ausgewählt aus der Gruppe bestehend aus Metallsilikaten, Verdickungsmitteln auf Basis von Poly(meth)acrylsäure, Verdickungsmitteln auf Basis von Polyurethanen, polymeren Wachsen und Mischungen davon.

Das Metallsilikat wird bevorzugt aus der Gruppe der Smektite ausgewählt. Besonders bevorzugt werden die Smektite aus der Gruppe der Montmorillonite und Hectorite ausgewählt. Insbesondere werden die Montmorillonite und Hectorite aus der Gruppe bestehend aus Aluminium-Magnesium-Silikaten sowie Natrium-Magnesium- und Natrium-Magnesium-Fluor-Lithium-Schichtsilikaten, ausgewählt. Diese anorganischen Schichtsilikate werden unter der Marke Laponite® vertrieben. Verdickungsmittel auf Basis von Poly(meth)acrylsäure sind gegebenenfalls vernetzt und/oder mit einer geeigneten Base neutralisiert. Beispiele solcher Verdickungsmittel auf Basis von Poly(meth)acrylsäure sind "Alkali Swellable Emulsions" (ASE), und hydrophob modifizierte Varianten davon, die "Hydrophically modified Alkali Swellable Emulsions (HASE). Vorzugsweise sind Verdickungsmittel auf Basis von Poly(meth)acrylsäure anionisch. Entsprechende Produkte wie Rheovis® AS 1130 sind kommerziell erhältlich.

Verdickungsmittel auf Basis von Polyurethanen sind gegebenenfalls vernetzt und/oder mit einer geeigneten Base neutralisiert. Entsprechende Produkte wie Rheovis® PU 1250 sind kommerziell erhältlich. Wird als Polymer (C2) wenigstens ein Polyurethan eingesetzt, so ist das Verdickungsmittel auf Basis von Polyurethan vorzugsweise von diesem Polymer (C2) verschieden. Wird als polymeres Harz (A1) wenigstens ein Polyurethan eingesetzt, so ist das Verdickungsmittel auf Basis von Polyurethan vorzugsweise von diesem polymeren Harz (A1) verschieden.

Als polymere Wachse eignen sich beispielsweise gegebenenfalls modifizierte polymere Wachse auf Basis von Ethylen-Vinylacetat-Copolymeren. Entsprechende Produkte sind zum Beispiel unter der Bezeichnung Aquatix® kommerziell erhältlich.

Enthält die erfindungsgemäße Beschichtungszusammensetzung wenigstens ein weiteres Verdickungsmittel (D), so liegt das relative Gewichtsverhältnis des Verdickungsmittels (C) in der erfindungsgemäßen Beschichtungszusammensetzung zu dem weiteren Verdickungsmittel (D) vorzugsweise im Bereich von 100:1 bis 1:1, besonders bevorzugt von 80:1 bis 1:1. Alle Angaben beziehen sich auf den Festkörper der Komponenten.

Ist die Komponente (D) ein Metallsilikat, so liegt das relative Gewichtsverhältnis des Verdickungsmittels (C) in der erfindungsgemäßen Beschichtungszusammensetzung zu der Komponente (D) vorzugsweise in einem Bereich von 50:1 bis 5:1, besonders bevorzugt in einem Bereich von 45:1 bis 6:1. Ist die Komponente (D) ein Verdickungsmittel auf Basis von Poly(meth)acrylsäure, so liegt das relative Gewichtsverhältnis des Verdickungsmittels (C) in der erfindungsgemäßen Beschichtungszusammensetzung zu der Komponente (D) vorzugsweise in einem Bereich von 85:1 bis 1:1, besonders bevorzugt in einem Bereich von 80:1 bis 1:1. Ist die Komponente (D) ein Verdickungsmittel auf Basis eines polymeren Wachses, so liegt das relative Gewichtsverhältnis des Verdickungsmittels (C) in der erfindungsgemäßen Beschichtungszusammensetzung zu der Komponente (D) vorzugsweise in einem Bereich von 35:1 bis 5:1, besonders bevorzugt in einem Bereich von 30:1 bis 7:1. Alle Angaben beziehen sich auf den Festkörper der Komponenten.

Vorzugsweise liegt das wenigstens eine Metallsilikat als weiteres Verdickungsmittel (D) in der erfindungsgemäßen Beschichtungszusammensetzung in einer Menge in einem Bereich von 2,5 bis 10 Gew.-%, besonders bevorzugt in einem Bereich von 4,5 bis 8 Gew.-%, bezogen auf den Festkörpergehalts des polymeren Harzes (A1), vor. Vorzugsweise liegt das wenigstens eine Metallsilikat als weiteres Verdickungsmittel (D) in der erfindungsgemäßen Beschichtungs-zusammensetzung in einer Menge in einem Bereich von 1,5 bis 8 Gew.-%, besonders bevorzugt in einem Bereich von 2,0 bis 7 Gew.-%, bezogen auf den gesamten Festkörpergehalt der Beschichtungszusammensetzung, vor.

### Additiv (E)

Die erfindungsgemäße Beschichtungszusammensetzung kann je nach erwünschter Anwendung ein oder mehrere üblicherweise eingesetzte Additive als Komponente (E) enthalten. Vorzugsweise sind diese Additive (E) ausgewählt aus der Gruppe bestehend aus Antioxidantien, Antistatika, Netz- und Dispergiermitteln, Emulgatoren, Verlaufshilfsmitteln, Löslichkeitsvermittlern, Entschäumungsmitteln, Benetzungsmitteln, Stabilisierungsmitteln, vorzugsweise Hitze- und/oder WärmeStabilisatoren, Prozess-Stabilisatoren und UV- und/oder Licht-Stabilisatoren, Lichtschutzmitteln, Entlüftern, Inhibitoren, Katalysatoren, Wachsen, Netz- und Dispergiermitteln, Flexibilisierungsmitteln, Flammschutzmitteln, Reaktivverdünnern, Trägermedien, Harze, Wachse, Hydrophobierungsmitteln, Hydrophilierungsmitteln, Schlagzähmachern, Blähmitteln, Prozesshilfsmitteln, Weichmachern, und Gemischen aus den vorstehend genannten weiteren Additiven. Der Additiv-Gehalt an Additiv (E) in der erfindungsgemäßen Beschichtungszusammensetzung kann variieren. Vorzugsweise liegt der Gehalt, bezogen auf das Gesamtgewicht der erfindungsgemäßen Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

### Verfahren zur Herstellung der wässrigen Beschichtungszusammensetzung

Die vorliegende Erfindung betrifft weiterhin ein Verfahren zur Herstellung der erfindungsgemäßen Beschichtungszusammensetzung.

Die erfindungsgemäße Beschichtungszusammensetzung kann dadurch hergestellt werden, dass zunächst eine wässrige Dispersion eines Verdickungsmittels (C) hergestellt wird, die erhältlich ist durch ein Verfahren umfassend wenigstens die Schritte (1), (2), (3) und (4), nämlich

(1) Herstellen einer Dispersion oder Lösung wenigstens eines polymeren Harzes (C2) in wenigstens einem organischen Lösemittel, wobei das polymere Harz (C2) ein Polyurethan ist,

(2) Herstellen einer Mischung aus der nach Schritt (1) erhaltenen Dispersion oder Lösung und einer Schmelze oder Lösung wenigstens eines Polyamids als wenigstens ein polymeres Harz (C1), welches eine Säure-Zahl in einem Bereich von 1 bis 200 mg KOH pro g an (C1) aufweist,

(3) Zugeben von Wasser zu der nach Schritt (2) erhaltenen Mischung und

(4) Entfernen des organischen Lösemittels aus der nach Schritt (3) erhaltenen Mischung unter Erhalt der wässrigen Dispersion des wenigstens einen Verdickungsmittels (C).

Gegebenenfalls kann zwischen Schritt (2) und Schritt (3) wie vorstehend beschrieben ein Schritt (2a) durchgeführt werden.

Im Anschluss daran wird die so erhaltene wässrige Dispersion des Verdickungsmittels (C) als Komponente mit den weiteren erfindungsgemäß zur Herstellung der erfindungsgemäßen Beschichtungszusammensetzung eingesetzten Komponenten (A) und (B) sowie gegebenenfalls (D), (E), organischer Lösemittel und gegebenenfalls weiterem Wasser in einem Schritt (5) vermischt, beispielsweise mittels Schnellrührer, Rührkessel, Rührwerksmühlen, Dissolver, Kneter, oder In-Line-Dissolvern.

Das in Schritt (2) eingesetzte Polyamid (C1) wird dabei vorzugsweise gemäß vorstehend genanntem Schritt (0) erhalten.

## Verwendung

Ein weiterer Gegenstand der vorliegenden Erfindung ist eine Verwendung der erfindungsgemäßen Beschichtungszusammensetzung zur zumindest teilweisen Beschichtung eines gegebenenfalls beschichteten Substrats mit einer Basislackschicht.

Als Substrat eignen sich beispielsweise zu beschichtende Gegenstände aus Metall oder Kunststoff wie daraus hergestellte Karosserien und deren Teile von Automobilen wie Personenkraftwagen, Lastwagen, Motorrädern und Autobussen, und aus Metall oder Kunststoff hergestellte Teile von elektrischen Haushaltsprodukten.

## Verfahren, Basislackschicht und Substrat

Ein weiterer Gegenstand der vorliegenden Erfindung ist ein Verfahren zur zumindest teilweisen Beschichtung eines gegebenenfalls beschichteten Substrats mit einer Basislackschicht umfassend wenigstens einen Schritt (a):

(a) zumindest teilweise Beschichtung wenigstens eines gegebenenfalls beschichteten Substrats mit einer Basislackschicht mit der erfindungsgemäßen wässrigen Beschichtungszusammensetzung.

Schritt (a) erfolgt dabei durch zumindest teilweises Kontaktieren des Substrats mit der erfindungsgemäßen Beschichtungszusammensetzung.

Gegebenenfalls kann auf Schritt (a) ein weiterer Schritt (b) folgen, nämlich das Aufbringen einer weiteren Schicht, vorzugsweise einer Klarlackschicht, auf die nach Schritt (a) aufgebrachte Basislackschicht. In diesem Fall ist das erfindungsgemäße Verfahren ein Verfahren zum Erhalt einer Mehrschichtlackierung.

Ein weiterer Gegenstand der vorliegenden Erfindung ist eine Basislackschicht, welche erhältlich ist durch zumindest teilweise Beschichtung wenigstens eines gegebenenfalls beschichteten Substrats mit der erfindungsgemäßen wässrigen Beschichtungszusammensetzung oder welche erhältlich ist durch das erfindungsgemäße Verfahren.

Ein weiterer Gegenstand der vorliegenden Erfindung ist ein zumindest teilweise mit der erfindungsgemäßen wässrigen Beschichtungszusammensetzung oder mit der erfindungsgemäßen Basislackschicht beschichtetes Substrat.

Die erfindungsgemäße Beschichtungszusammensetzung kann dabei direkt oder nach dem vorangegangenen zumindest teilweisen Auftragen einer Grundbeschichtungszusammensetzung, wie einer kationisch elektro-abscheidbaren Beschichtungszusammensetzung (KTL-Lack), und erforderlichenfalls nach dem zumindest teilweisen Auftrag einer weiteren Beschichtungszusammensetzung auf den KTL-Lack auf die zu beschichtenden Gegenstände aufgebracht werden. Anschließend erfolgt vorzugsweise ein Trocknen dieser Beschichtungsfilme. Vorzugsweise wird die erfindungsgemäße Beschichtungszusammensetzung als Lackierung auf Automobilkarosserien und deren Teile aufgebracht. Die zu beschichtenden metallischen Gegenstände werden zuvor bevorzugt einer chemischen Behandlung mit Phosphaten und Chromaten, vorzugsweise Phosphaten wie Metallphosphaten, insbesondere Zinkphosphaten, unterworfen. Weiterhin können bekannte herkömmliche Materialien als Unterbeschichtungszusammensetzungen und als Zwischenbeschichtungszusammensetzungen zum Einsatz kommen.

Die erfindungsgemäße Beschichtungszusammensetzung kann auf diese zu beschichtenden Substrate (mit Einschluss von solchen, die gegebenenfalls mit der Unterbeschichtungszusammensetzung zumindest teilweise beschichtet worden sind und die weiterhin in geeigneter Weise gegebenenfalls zumindest teilweise mit der Zwischenbeschichtungszusammensetzung beschichtet worden sind) durch ein elektrostatisches Beschichten, durch ein Luftspraybeschichten und durch luftloses Spraybeschichten beschichtet werden. Die Dicke des dadurch erhaltenen Überzugsfilms davon fällt vorzugsweise in einen Bereich von 5 bis 35 $\mu$m, insbesondere 10 bis 25 $\mu$m, als gehärteter Überzugsfilm. Der Überzugsfilm kann beispielsweise dadurch getrocknet werden, dass er 2 bis 40 Minuten, vorzugsweise 5 bis 20 Minuten, lang auf 50 bis 100°C (Ofentemperatur) erhitzt wird.

Eine klare Beschichtungszusammensetzung kann auf den Überzugsfilm aus der erfindungsgemäßen Beschichtungszusammensetzung nach dessen Härtung oder ohne dessen Härtung, d.h. auf eine beschichtete Seite davon, durch ein "2-mal-Aufschichten-1-mal-Härten" (2C1B)-Verfahren oder ein "2-mal-Aufschichten-2-mal-Härten" (2C2B)-Verfahren beschichtet werden.

Weiterhin eignen sich die erfindungsgemäßen Beschichtungszusammensetzungen auch für die Verwendung in einem 2-fach Auftrag (Nass-in Nass Lackierung) auf den nach kurzer Vortrocknung ein Klarlack aufgetragen wird, der zusammen mit den zuerst lackierten Schichten eingebrannt wird (3C1B).

Die klare Beschichtungszusammensetzung zum Auftrag eines solchen Klarlacks kann dadurch aufgeschichtet werden, dass zuerst die erfindungsgemäße Beschichtungszusammensetzung auf das zu beschichtende Substrat in der vorstehend beschriebenen Art und Weise aufgeschichtet wird und dass man die klare Beschichtungszusammensetzung mit einem auf vorzugsweise 30 bis 80 Gew.-% kontrollierten Feststoffgehalt in der Beschichtungszusammensetzung auf eine beschichtete Oberfläche davon durch ein elektrostatisches Beschichten, ein Luftsprühbeschichten und ein luftloses Sprühbeschichten nach dem Härten eines Überzugsfilms davon durch Erhitzen oder im nicht-gehärteten Zustand aufgeschichtet wird. Die Filmdicke der klaren Beschichtungszusammensetzung fällt vorzugsweise in einen Bereich von gewöhnlich 5 bis 100 $\mu$m, insbesondere 20 bis 80 $\mu$m, bezogen auf den gehärteten Überzugsfilm. Der gesamte Überzugsfilm kann dadurch gehärtet werden, dass er 10 bis 40 Minuten lang auf 100 bis 180°C erhitzt wird.

**Bestimmungsmethoden**

**1.** Bestimmung der Säure-Zahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, die zur Neutralisation von 1 g Probe unter den in der DIN EN ISO 2114 festgelegten Bedingungen erforderlich ist.

**2.** Bestimmung der OH-Zahl

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

**3.** Bestimmung des nicht-flüchtigen Anteils

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil.

**4.** Bestimmung der Helligkeit und des Flop-Indexes

Zur Bestimmung der Helligkeit oder des Flop-Indexes wird eine erfindungsgemäße Beschichtungszusammensetzung (oder eine Vergleichszusammensetzung) als Wasserbasislack auf ein mit einer Füllerlackierung beschichtetes Stahlblech der Abmessungen 32 x 60 cm mittels Zweifachauftrag appliziert, wobei die Applikation im ersten Schritt elektrostatisch mit einer Trockenschichtdicke von 8-9 $\mu$m erfolgt und die Applikation im zweiten Schritt nach einer 2-minütigen Ablüftzeit bei Raumtemperatur (18 bis 23°C) pneumatisch mit einer Trockenschichtdicke von 4-5 $\mu$m erfolgt. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Trockenschichtdicke von 40-45 $\mu$m appliziert. Die resultierende Klarlackschicht wird während einer Dauer 10 Minuten bei Raumtemperatur (18 bis 23°C) abgelüftet. Anschließend erfolgt eine Härtung im Umluftofen bei 140 °C für weitere 20 Minuten. Das entsprechend beschichtete Substrat wird mit Hilfe eines Spektralphotometers der Firma X-Rite (X-Rite MA68 Multi-Angle Spectrophotometer) vermessen. Dabei wird die Oberfläche mit einer Lichtquelle beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL*a*b*-Farbraum berechnet werden, wobei L* die Helligkeit, a* den Rot-Grün-Wert und b* den Gelb-Blau-Wert charakterisieren. Dieses Verfahren ist zum Beispiel in der ASTM E2194-12 insbesondere für Beschichtungen beschrieben, die wenigstens ein Effektpigment als Pigment enthalten. Der oft für die Quantifizierung des sogenannten Metallic-Effekts herangezogene abgeleitete Wert ist der sogenannte Flop-Index, welcher die Abhängigkeit der Helligkeit vom Beobachtungswinkel beschreibt (vgl. A.B.J. Rodriguez, JOCCA, 1992 (4), S. 150-153). Aus den ermittelten Helligkeitswerten für die Betrachtungswinkel 15°, 45° und 110° kann der so genannte Flop-Index (FL) nach der Formel

$$FL = 2{,}69\ (L^*_{15°} - L^*_{110°})^{1,11} / (L^*_{45°})^{0,86}$$

berechnet werden, wobei L* für den im jeweiligen Messwinkel (15°, 45° und 110°) gemessenen Helligkeitswert steht.

**5.** Beurteilung des Auftretens von Stippen

Zur Beurteilung des Auftretens von Stippen wird eine erfindungsgemäße Beschichtungszusammensetzung (oder eine Vergleichszusammensetzung) als Wasserbasislack auf ein mit einer Füllerlackierung beschichtetes Stahlblech der Abmessungen 32 x 60 cm mittels Zweifachauftrag appliziert, wobei die Applikation im ersten Schritt elektrostatisch mit einer Trockenschichtdicke von 8-9 $\mu$m erfolgt und die Applikation im zweiten Schritt nach einer 2-minütigen Ablüftzeit bei Raumtemperatur (18 bis 23°C) pneumatisch mit einer Trockenschichtdicke von 4-5 $\mu$m erfolgt. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Trockenschichtdicke von 40-45 $\mu$m appliziert. Die resultierende Klarlackschicht wird während einer Dauer 10 Minuten bei Raumtemperatur (18 bis 23°C) abgelüftet. Anschließend erfolgt eine Härtung im Umluftofen bei 140 °C für weitere 20 Minuten.
Die Auswertung von Stippen erfolgt visuell, dabei wird eine Note von 1-5 vergeben (1 = keine Stippen / 5 = sehr viele Stippen).

**6.** Beurteilung des Auftretens von Nadelstichen

Zur Beurteilung des Auftretens von Nadelstichen wird eine erfindungsgemäße Beschichtungszusammensetzung (oder eine Vergleichszusammensetzung) als Wasserbasislack auf ein mit einer Füllerlackierung beschichtetes Stahlblech der Abmessungen 32 x 60 cm mittels Einfachauftrag appliziert. Zuvor wird das Stahlblech an einer Längskante mit zwei Klebstreifen (Tesaband, 19 mm) versehen, um nach der Beschichtung Schichtdickendifferenzen ermitteln zu können. Der Wasserbasislack wird dann elektrostatisch mit einer Trockenschichtdicke von 16-19 $\mu$m appliziert. Die resultierende Wasserbasislackschicht wird anschließend nach einer Ablüftzeit bei Raumtemperatur (18 bis 23°C) von 5 Minuten im Umluftofen für 10 Minuten bei 80 °C getrocknet. Nach Entfernen eines der beiden Klebestreifen wird auf die getrocknete Wasserbasislackschicht per Fließbecherpistole manuell ein handelsüblicher Zweikomponenten-Klarlack (Evergloss® der BASF Coatings GmbH) keilförmig mit einer Trockenschichtdicke von 0-55 $\mu$m appliziert. Die resultierende Klarlackschicht wird während 10 Minuten bei Raumtemperatur (18 bis 23°C) abgelüftet; anschließend erfolgt die Härtung im Umluftofen bei 140 °C für weitere 20 Minuten. Nach Entfernung des zweiten Klebestreifens wird die Trockenschichtdicke des Wasserbasislackes kontrolliert sowie für den Klarlackkeil die Schichtdickenbereiche 20-30 $\mu$m, 30-40 $\mu$m sowie 40-50 $\mu$m auf dem Stahlblech markiert. Die jeweiligen Schichtdicken werden dabei nach DIN EN ISO 2808 (Datum: Mai 2007), Verfahren 12A (z.B. mit dem Messgerät MiniTest 3100 - 4100 der Firma ElektroPhysik) bestimmt.
Die Auswertung der Nadelstiche erfolgt visuell in den drei getrennten Klarlack-Trockenschichtdickenbereichen (20-30 $\mu$m, 30-40 $\mu$m und 40-50 $\mu$m). Je Bereich wird die Anzahl der Nadelstiche ausgezählt. Alle Ergebnisse werden auf eine Fläche von 200 cm$^2$ normiert. Zusätzlich wird gegebenenfalls protokolliert, ab welcher Trockenschichtdicke der Klarlackschicht keine Nadelstiche mehr auftreten.

**7.** Bestimmung des Verlaufs nach Schwitzwasserbehandlung

Die Beurteilung des Verlaufes bzw. der Welligkeit der beschichteten Substrate wird mit einem Wave scan Messgerät der Firma Byk/Gardner durchgeführt. Die beschichteten Substrate werden wie unter Punkt **4.** beschrieben mittels eines Zweifachauftrags hergestellt. Zu diesem Zweck wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Diese Messungen werden vor und nach Schwitzwasserbelastung durchgeführt. Dazu werden die beschichteten Substrate über einen Zeitraum von 10 Tagen in einer Klimakammer nach Prüfklima CH nach DIN EN ISO 6270-2 (Datum: September 2005) gelagert. Anschließend werden die beschichteten Substrate 24 Stunden nach Entnahme aus der Klimakammer visuell bezüglich einer Blasenbildung untersucht sowie der Verlauf bzw. die Welligkeit beurteilt.

### 8. Bestimmung der Lagerstabilität

Zur Bestimmung der Lagerstabilität der erfindungsgemäßen Beschichtungszusammensetzungen (oder von Vergleichsbeschichtungszusammensetzungen) werden diese vor und nach einer zweiwöchigen Lagerung bei 40 °C mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C $\pm$ 0,2 °C) untersucht. Dabei werden die Proben zunächst 3 Minuten bei einer Scherrate von 100 s$^{-1}$ vorgeschert. Anschließend erfolgt eine Temperierung ohne Scherbelastung. Zur Messung einer sogenannten Fließkurve wird innerhalb von ca. 5 Minuten ein Scherratenbereich von 0,1 s$^{-1}$ bis 1000 s$^{-1}$ abgefahren (Aufwärtskurve). Danach wird für eine Minute bei 1000 s$^{-1}$ geschert (Haltezeit), bevor abschließend wiederum innerhalb von ca. 5 Minuten ein Scherratenbereich von 1000 s$^{-1}$ bis 0,1 s$^{-1}$ abgefahren wird (Abwärtskurve). Während der Auf- und Abwärtskurve werden 36, während der Haltezeit 10 Messpunkte erfasst. Das mittlere Viskositätsniveau während der Haltezeit (Hochscherviskosität) sowie das Viskositätsniveau bei 1 s$^{-1}$ (Niederscherviskosität), ermittelt aus der Abwärtskurve, werden aus den Messdaten ermittelt und die Werte vor und nach Lagerung miteinander verglichen.

### 9. Bestimmung der MEQ-Werte

Der MEQ-Wert gibt die Anzahl der Milli-Äquivalente (MEQ) an Säuren (MEQ(Säure)) oder Basen (MEQ(Base)) an, die in 100 g des nichtflüchtigen Anteils einer Probe enthalten sind und wird angelehnt an DIN EN ISO 15880 (Datum: September 2004) bestimmt.

Dabei wird eine auf 0,001 g genau eingewogene Probe mit 70 mL eines geeigneten Lösemittels wie beispielsweise Methoxypropanol versetzt. Wird ein polymeres Harz als Probe eingesetzt, so werden 3,000 bis 5,000 g der Probe eingewogen. Handelt es sich bei der Probe um eine Dispersion, so werden 8,000 bis 10,000 g dieser Dispersion eingewogen und zunächst vor Zugabe des Lösemittels gemäß der vorstehend beschriebenen Methode deren Festkörpergehalt bestimmt. Zur Bestimmung des MEQ(Säure)-Werts werden 6 Tropfen Phenolphthalein-Lösung zur Probenlösung zugegeben und mit wässriger Kaliumhydroxid-Lösung (0,5 M) bis zu einem Farbumschlag von farblos nach rosa titriert. Zur Bestimmung des MEQ(Base)-Werts werden 6 Tropfen Bromphenolblau-Lösung zur Probenlösung zugegeben und mit wässriger Salzsäure (0,5 M) bis zu einem Farbumschlag von blau nach gelb titriert.

### 10. Bestimmung des zahlenmittleren und des gewichtsmittleren Molekulargewichts

Die Bestimmung des zahlenmittleren Molekulargewichts ($M_n$) erfolgt mittels Gel-Permeations-Chromatographie (GPC). Die Bestimmungsmethode ist dabei angelehnt an DIN 55672-1 (Datum: August 2007). Neben dem zahlenmittleren Molekulargewicht können mit dieser Methode zudem das gewichtsmittlere Molekulargewicht ($M_w$) sowie die Polydispersität (Verhältnis von gewichtsmittlerem Molekulargewicht ($M_w$) zu zahlenmittlerem Molekulargewicht ($M_n$)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### 11. Beurteilung des Auftretens von Stippen bei Applikation der erfindungsgemäß eingesetzten wässrigen Dispersionen des Verdickungsmittels (C) oder einer Vergleichsdispersion auf ein Substrat

Zur Beurteilung des Auftretens von Stippen werden die Dispersionen gemäß der folgenden allgemeinen Vorschrift untersucht:

Die jeweilige Dispersion wird mittels einer 100 $\mu$m Kastenrakel auf eine Glastafel appliziert. Im nassen Zustand wird der so gebildete Film nach einer 60-minütigen Ablüftzeit bei 18 bis 23°C visuell hinsichtlich des Auftretens von Stippen beurteilt, indem er gegen eine Lichtquelle gehalten wird, um eventuelle Lufteinschlüsse nicht als Stippen fehlzuinterpretieren. Es wird eine Note von 1-5 vergeben (1 = keine Stippen / 5 = sehr viele Stippen).

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

**1.** Herstellung von erfindungsgemäß zur Herstellung des Verdickungsmittels (C) eingesetzten Polyamiden (C1)

**1.1** Allgemeine Vorschrift zur Herstellung von Polyamiden (C1):

Es wird wenigstens eine Polycarbonsäure (C1a) oder ein entsprechendes Derivat davon wie beispielsweise ein entsprechender Ester oder ein entsprechendes Anhydrid und gegebenenfalls wenigstens ein organisches Lösemittel in einem Reaktionsgefäß mit Rührer, Rückflusskühler und Wasserabscheider vorgelegt und mit wenigstens einem Polyamin (C1b) gemischt und solange unter Rühren auf eine Temperatur im Bereich von 160 bis 240°C erhitzt, bis die erwünschte Menge an Wasser und gegebenenfalls vorhandenen organischem Lösemittel abgeschieden ist, welche den vollständigen oder gewünschten Umsatz der Komponente (C1a) mit der Komponente (C1b) zur Herstellung des Polyamids (C1) anzeigt.

*Polyamid 1*

Zur Herstellung des Polyamids 1 werden 687,5 g dimerisierter Fettsäure (kommerziell erhältliches Produkt Pripol® 1012 der Firma Croda) und Dodecandicarbonsäure (57,5 g) in 22,4 g Xylol vorgelegt und die resultierende Mischung M1 auf 60°C erhitzt. 116,20 g Hexamethylendiamin werden bei einer Ofentemperatur von 80°C geschmolzen und portionsweise zur der Mischung M1 gegeben. Nach beendeter Zugabe wird die Mischung zunächst für eine Dauer von 10 Minuten auf 130 bis 140°C erhitzt und danach auf 175°C. Diese Temperatur wird gehalten und dabei das entstehende Wasser abdestilliert. Die Säure-Zahl der resultierenden Mischung wird dabei mehrfach bestimmt. Die Reaktion wird solange fortgeführt, bis eine Säure-Zahl von 68,5 mg KOH/g erreicht ist (nach ca. 3 h).

*Polyamid 2*

Zur Herstellung des Polyamids 2 werden 724,1 g dimerisierter Fettsäure (kommerziell erhältliches Produkt Pripol® 1012 der Firma Croda) in 21,7 g Xylol vorgelegt und die resultierende Mischung M1 auf 60°C erhitzt. 116,2 g Hexamethylendiamin werden bei einer Ofentemperatur von 80°C geschmolzen und portionsweise zur der Mischung M1 gegeben. Nach beendeter Zugabe wird die Mischung für eine Dauer von 10 Minuten auf 130 bis 140°C erhitzt und danach auf 175°C. Diese Temperatur wird gehalten und dabei das entstehende Wasser abdestilliert. Die Säure-Zahl der resultierenden Mischung wird dabei mehrfach bestimmt. Die Reaktion wird solange fortgeführt, bis eine Säure-Zahl von 37,9 mg KOH/g erreicht ist.

**2.** Herstellung von erfindungsgemäß eingesetzten Verdickungsmitteln (C)

**2.1** Allgemeine Vorschrift zur Herstellung von erfindungsgemäß eingesetzten Verdickungsmitteln (C):

Es wird eine Schmelze wenigstens eines Polyamids (C1) hergestellt. Diese wird in eine Dispersion oder Lösung wenigstens eines Polymeren (C2) in wenigstens einem organisches Lösemittel wie beispielsweise MEK eingebracht. Zu dieser Mischung werden Wasser und gegebenenfalls wenigstens ein Neutralisationsmittel hinzugegeben. Das wenigstens eine organische Lösemittel wird unter Erhalt des in Wasser dispergierten Verdickungsmittels (C) entfernt.

*Verdickungsmittel 1*

Zunächst werden 600 g einer lösemittelhaltigen Dispersion eines Polyurethans als ein Polymer (C2) mit einem Festkörperanteil von 70 Gew.-% vorgelegt und auf eine Temperatur von 80°C erhitzt. Diese lösemittelhaltige Dispersion eines Polyurethans wird hergestellt wie in EP 0 228 003 A1, Seite 8, Zeilen 5 bis 16 beschrieben ist und enthält Methylethylketon (MEK) als organisches Lösemittel. Anschließend wird eine Schmelze von 172,1 g des *Polyamids 1* (Schmelze wird erzielt durch Erhitzen auf 140°C) über eine Dauer von 30 Minuten unter Rühren portionsweise zu der lösemittelhaltigen Dispersion des Polyurethans hinzugegeben. Danach werden zu dieser Mischung 37,9 g Dimethylethanolamin (DMEA) über eine Dauer von 30 Minuten zudosiert und die resultierende Mischung über weitere 30 Minuten gerührt. 1693,6 g deionisiertes Wasser werden dieser Mischung über eine Dauer von 1 h zugesetzt und die Mischung über die Dauer einer weiteren Stunde gerührt. Das MEK wird abdestilliert und der Festkörpergehalt des resultierenden Verdickungsmittels (C) gegebenenfalls durch Zugabe von deionisiertem Wasser auf 30 Gew.-% eingestellt, falls beim Entfernen von MEK zuviel Wasser mit abdestilliert wird, so dass der Festkörper >30 Gew.-% ist. Es wurden folgende MEQ-Werte bestimmt: MEQ(Säure): 0,683 mmol/g; MEQ(Base): 0,695 mmol/g. Das Verdickungsmittel 1 wird nachfolgend in Form der so erhaltenen wässrigen Dispersion eingesetzt.

*Verdickungsmittel 2*

Zunächst werden 600 g einer lösemittelhaltigen Dispersion eines Polyurethans als ein Polymer (C2) mit einem Festkörperanteil von 70 Gew.-% vorgelegt und auf eine Temperatur von 80°C erhitzt. Diese lösemittelhaltige Dispersion eines Polyurethans wird hergestellt wie in EP 0 228 003 A1, Seite 8, Zeilen 5 bis 16 beschrieben ist und enthält Methylethylketon als organisches Lösemittel. Anschließend wird eine Schmelze von 172,1 g des *Polyamids 2* (Schmelze wird erzielt durch Erhitzen auf 140°C) über eine Dauer von 30 Minuten unter Rühren portionsweise zu der lösemittelhaltigen Dispersion des Polyurethans hinzugegeben. Danach werden zu dieser Mischung 25,6 g Dimethylethanolamin (DMEA) über eine Dauer von 30 Minuten zudosiert und die resultierende Mischung über weitere 30 Minuten gerührt. 1658,6 g deionisiertes Wasser werden dieser Mischung über eine Dauer von 1 h zugesetzt und die Mischung über die Dauer einer weiteren Stunde gerührt. Das MEK wird abdestilliert und der Festkörpergehalt des resultierenden Verdickungsmittels (C) gegebenenfalls durch Zugabe von deionisiertem Wasser auf 25 Gew.-% eingestellt, falls beim Entfernen von MEK zuviel Wasser mit abdestilliert wird, so dass der Festkörper >25 Gew.-% ist. Es wurden folgende MEQ-Werte bestimmt: MEQ(Säure): 0,506 mmol/g; MEQ(Base): 0,505 mmol/g. Das Verdickungsmittel 2 wird nachfolgend in Form der so erhaltenen wässrigen Dispersion eingesetzt.

**3.** Herstellung von erfindungsgemäßen Beschichtungszusammensetzungen und Vergleichsbeschichtungszusammensetzungen

**3.1** Die nachfolgend genannten Komponenten der jeweiligen Beschichtungszusammensetzung haben folgende Bedeutungen:

Die wässrige Dispersion eines polymeren Harzes (I) wird hergestellt wie auf Seite 20, Zeilen 9 bis 21 der DE 199 48 004 A1 beschrieben.

Die wässrige Dispersion eines polymeren Harzes (II) wird hergestellt wie in Spalte 16, Zeilen 37 bis 59 der DE 40 09 858 A1 innerhalb des Beispiels D beschrieben.

Die wässrige Dispersion eines polymeren Harzes (III) wird hergestellt wie auf Seite 7, Zeile 55 bis Seite 8, Zeile 23 der DE 44 37 535 A1 beschrieben.

Die wässrige Dispersion eines polymeren Harzes (IV) wird hergestellt wie auf Seite 8, Zeilen 5 bis 20 der EP 0 228 003 A1 beschrieben.

Rheovis® AS 1130 ist eine kommerziell erhältliche wässrige Lösung der Firma BASF SE enthaltend 30 Gew.-% eines Verdickers basierend auf einem Acryl-Copolymer.

Rheovis® PU 1250 ist eine kommerziell erhältliche wässrige Butyldiglykol-Lösung der Firma BASF SE enthaltend 40 Gew.-% eines Verdickers basierend auf einem Polyurethan.

Luwipal® 052 ist ein Melaminformaldehydharz der Firma BASF SE.

Cymel® 203 ist ein Melaminformaldehydharz der Firma Allnex.

Disparlon® AQ630 ist eine kommerziell erhältliche Dispersion eines Polyamids der Firma Kusumoto Chemicals Co. Ltd. mit einem nicht-flüchtigen Anteil an Polyamid von 18 Gew.-%.

Disparlon® AQ600 ist eine kommerziell erhältliche Dispersion eines Polyamids der Firma Kusumoto Chemicals Co. Ltd. mit einem nicht-flüchtigen Anteil an Polyamid von 20 Gew.-%.

Alu Stapa Hydrolux® 2154 & VP56450 sind zwei handelsübliche Aluminiumpigmente, erhältlich von der Firma Altana-Eckart.

Pluriol® E300 ist ein kommerziell erhältliches Polyethylenglykol der Firma BASF SE.

Agitan® 281 ist ein kommerziell erhältlicher Entschäumer der Firma Münzing Chemie GmbH.

Die wässrige Dispersion des *Polyamids 1* wird wie folgt hergestellt: Das *Polyamid 1* wird wie unter Punkt **1.1** beschrieben hergestellt. Anschließend wird das so erhaltene *Polyamid 1* nach Erreichen einer Säure-Zahl von 68,5 mg KOH/g (nach ca. 3 h) auf 120°C abgekühlt und dazu 413 g Butylglykol hinzugegeben und die resultierende Mischung bei 100°C mit Dimethylethanolamin (DMEA) (85,5 g) versetzt und gerührt. Die resultierende Mischung wird in 1600 g deionisiertes Wasser gegeben, welches eine Temperatur von 90-95°C aufweist. Die resultierende Mischung wird daraufhin 30 Minuten bei 80°C gerührt und dann zunächst auf 60°C abgekühlt und Rühren gelassen. Der Festkörpergehalt beträgt 22,6 Gew.-%. Es wurden folgende MEQ-Werte bestimmt: MEQ(Säure): 1,058 mmol/g; MEQ(Base): 1,076 mmol/g.

Die wässrige Dispersion des *Polyamids 2* wird wie folgt hergestellt: Das *Polyamid 2* wird wie unter Punkt **1.1** beschrieben hergestellt. Anschließend wird das so erhaltene *Polyamid 2* nach Erreichen einer Säure-Zahl von 37,9 mg KOH/g auf 120°C abgekühlt und 200 g der resultierenden Mischung dann in eine Mischung aus Dimethylethanolamin (DMEA) (12,3 g), 0,3 g Agitan® 281 und 1171,4 g deionisiertem Wasser gegeben, welches eine Temperatur von 90-95°C aufweist. Der Festkörpergehalt beträgt 20,0 Gew.-%. Es wurden folgende MEQ-Werte bestimmt: MEQ(Säure): 1,460 mmol/g; MEQ(Base): 0,595 mmol/g.

**3.2** Allgemeine Arbeitsvorschrift zur Herstellung von erfindungsgemäßen Beschichtungszusammensetzungen und Vergleichsbeschichtungszusammensetzungen:

Die in den nachstehenden Tabellen jeweils unter "wässrige Phase 1" aufgeführten Komponenten werden in der angegebenen Reihenfolge jeweils zu einer wässrigen Mischung M1 zusammengerührt. Anschließend werden die in den nachstehenden Tabellen unter "wässrige Phase 2" aufgeführten Komponenten in der angegebenen Reihenfolge jeweils zu einer zweiten wässrigen Mischung M2 zusammengerührt und zu der wässrigen Mischung M1 hinzugegeben und 10 min lang gerührt. Es resultiert jeweils die wässrige Mischung M3. Im nächsten Schritt wird aus den unter "organische Phase" aufgeführten Komponenten in den nachstehenden Tabellen jeweils eine organische Mischung hergestellt. Die organische Mischung wird zur wässrigen Mischung M3 gegeben. Sodann wird 10 min lang gerührt und mit Hilfe von deionisiertem Wasser und Dimethylethanolamin ein pH Wert von 8 und eine bestimmte Spritzviskosität bei einer Scherbelastung von 1000 s$^{-1}$, gemessen mit einem Rotations-Viskosimeter (Gerät Rheolab QC mit Temperiersystem C-LTD80/QC der Firma Anton Paar) bei 23 °C, eingestellt. Im Fall der Beschichtungszusammensetzungen **V1**, **V2** und **B1** wird eine Spritzviskosität von 90 ± 5 mPa·s eingestellt. Im Fall der Beschichtungszusammensetzung **B2** wird eine Spritzviskosität von 95 ± 5 mPa·s eingestellt. Im Fall der Beschichtungszusammensetzungen **V3, V4, V5, V6, V7** und **V8** sowie **B3, B4, B5, B6, B7, B8** und **B9** wird jeweils eine Spritzviskosität von 80 ± 5 mPa·s eingestellt.

Die jeweiligen Mengenangaben in jeder der nachstehenden Tabellen stellen jeweils Gewichtsteile dar.

**3.3** Beschichtungszusammensetzungen **V1** und **V2** (nicht erfindungsgemäß) und **B1** (erfindungsgemäß)

Tabelle 1.1: Herstellung von **V1, V2** und **B1**

|  | V1 | V2 | B1 |
|---|---|---|---|
| **Wässrige Phase 1** | | | |
| Wässrige Dispersion eines polymeren Harzes (I) | 21,00 | 21,00 | 9,00 |
| deionisiertes Wasser | 18,85 | 26,69 | 22,29 |
| Butylglykol | 3,33 | 3,62 | 3,62 |
| Butanol | 1,57 | 1,57 | 1,57 |
| Wässrige Dispersion eines polymeren Harzes (II) | 1,65 | 1,68 | 1,68 |
| Rheovis® AS 1130 | 4,75 | 4,32 | 4,32 |
| Dimethylethanolamin in Wasser (10 Gew.-%) | 0,37 | 0,36 | 0,36 |
| Luwipal® 052 | 4,11 | 4,11 | 4,11 |
| 2,4,7,9-Tetramethyl-5-decindiol in Butylglykol (52 Gew.-%) | 2,51 | 2,41 | 2,41 |
| Wässrige Dispersion eines polymeren Harzes (III) | 4,50 | 4,84 | 4,84 |
| Rheovis® PU1250 | 0,99 | 0,90 | 0,90 |
| **Wässrige Phase 2** | | | |
| deionisiertes Wasser | 14,27 | - | - |
| Dimethylethanolamin in Wasser (10 Gew.-%) | 0,01 | - | - |
| Disparlon® AQ630 | 6,39 | - | - |
| Butylglykol | 0,64 | - | - |
| Wässrige Dispersion des Polyamids 2 | - | 4,60 | - |
| Erfindungsgemäß eingesetztes Verdickungsmittel 2 | - | - | 21,00 |
| **Organische Phase** | | | |
| Mischung von Alu Stapa Hydrolux® 2154 & VP56450 | 5,10 | 5,10 | 5,10 |
| Butylglykol | 6,35 | 6,35 | 6,35 |
| Wässrige Dispersion eines polymeren Harzes (II) | 1,90 | 2,16 | 2,16 |
| Dimethylethanolamin in Wasser (10 Gew.-%) | 0,22 | 0,22 | 0,22 |

**3.4** Beschichtungszusammensetzung **B2** (erfindungsgemäß)

Tabelle 1.2: Herstellung von **B2**

| | **B2** |
|---|---|
| **Wässrige Phase 1** | |
| Wässrige Dispersion eines polymeren Harzes (I) | 21,51 |
| deionisiertes Wasser | 29,38 |
| Butylglykol | 3,62 |
| Butanol | 1,57 |
| Wässrige Dispersion eines polymeren Harzes (II) | 1,68 |
| Rheovis® AS 1130 | 4,32 |
| Dimethylethanolamin in Wasser (10 Gew.-%) | 0,36 |
| Luwipal® 052 | 4,11 |
| 2,4,7,9-Tetramethyl-5-decindiol in Butylglykol (52 Gew.-%) | 2,41 |
| Wässrige Dispersion eines polymeren Harzes (III) | 4,84 |
| Rheovis® PU 1250 | 0,90 |
| **Wässrige Phase 2** | |
| Erfindungsgemäß eingesetztes Verdickungsmittel 2 | 11,40 |
| **Organische Phase** | |
| Mischung von Alu Stapa Hydrolux® 2154 & VP56450 | 5,17 |
| Butylglykol | 6,35 |
| Wässrige Dispersion eines polymeren Harzes (II) | 2,16 |
| Dimethylethanolamin in Wasser (10 Gew.-%) | 0,22 |

**3.5** Beschichtungszusammensetzungen **V3** (nicht erfindungsgemäß) und **B3** (erfindungsgemäß)

Tabelle 1.3: Herstellung von **V3** und **B3**

| | **V3** | **B3** |
|---|---|---|
| **Wässrige Phase 1** | | |
| Wässrige Dispersion eines polymeren Harzes (IV) | 34,73 | 28,41 |
| deionisiertes Wasser | 13,02 | 13,02 |
| Butylglykol | 3,33 | 3,33 |
| Butanol | 2,35 | 2,35 |
| Rheovis® AS 1130 | 0,63 | 0,63 |
| deionisiertes Wasser | 1,88 | 1,88 |
| Dimethylethanolamin in Wasser (10 Gew.-%) | 0,59 | 0,59 |
| Cymel® 203 | 2,74 | 2,74 |
| 2,4,7,9-Tetramethyl-5-decindiol in Butylglykol (52 Gew.-%) | 2,51 | 2,51 |
| Wässrige Dispersion eines polymeren Harzes (III) | 4,50 | 4,50 |
| **Wässrige Phase 2** | | |
| deionisiertes Wasser | 12,80 | 2,51 |
| Dimethylethanolamin in Wasser-(10 Gew.-%) | 0,01 | 0,01 |
| Disparlon® AQ630 | 3,80 | |
| Butylglykol | 0,51 | 0,34 |
| Erfindungsgemäß eingesetztes Verdickungsmittel 1 | - | 8,56 |
| **Organische Phase** | | |
| Mischung von Alu Stapa Hydrolux® 2154 & VP56450 | 5,10 | 5,10 |
| Propylglykol | 6,35 | 6,35 |

**3.6** Beschichtungszusammensetzungen **V4** (nicht erfindungsgemäß) und **B4** (erfindungsgemäß)

Tabelle 1.4: Herstellung von **V4** und **B4**

| | V4 | B4 |
|---|---|---|
| **Wässrige Phase 1** | | |
| Wässrige Dispersion eines polymeren Harzes (IV) | 28,00 | 13,48 |
| deionisiertes Wasser | 23,80 | 21,92 |
| n-Butoxypropanol | 3,20 | 3,20 |
| Wässrige Dispersion eines polymeren Harzes (II) | 2,70 | 2,70 |
| Rheovis® AS 1130 | 1,00 | 1,00 |
| deionisiertes Wasser | 5,00 | 5,00 |
| Dimethylethanolamin in Wasser (10 Gew.-%) | 0,30 | 0,30 |
| Dimethylethanolamin | 0,25 | 0,25 |
| Cymel® 203 | 3,70 | 3,70 |
| Wässrige Dispersion eines polymeren Harzes (III) | 3,60 | 3,60 |
| **Wässrige Phase 2** | | |
| Wässrige Dispersion des Polyamids 2 | 4,60 | - |
| Erfindungsgemäß eingesetztes Verdickungsmittel 2 | - | 21,00 |
| **Organische Phase** | | |
| Mischung von Alu Stapa Hydrolux® 2154 & VP56450 | 5,30 | 5,30 |
| Butylglykol | 5,75 | 5,75 |
| Pluriol® E300 | 2,80 | 2,80 |

**3.7** Beschichtungszusammensetzungen **V5** (nicht erfindungsgemäß) und **B5** (erfindungsgemäß)

Tabelle 1.5: Herstellung von **V5** und **B5**

| | V5 | B5 |
|---|---|---|
| **Wässrige Phase 1** | | |
| Wässrige Dispersion eines polymeren Harzes (I) | 22,30 | 17,05 |
| deionisiertes Wasser | 13,02 | 13,02 |
| Butylglykol | 3,33 | 3,33 |
| Butanol | 2,35 | 2,35 |
| Wässrige Dispersion eines polymeren Harzes (II) | 1,65 | 1,65 |
| Aquatix® 821 | 1,67 | 1,67 |
| Dimethylethanolamin in Wasser (10 Gew.-%) | 0,37 | 0,37 |
| Cymel® 203 | 2,74 | 2,74 |
| 2,4,7,9-Tetramethyl-5-decindiol in Butylglykol (52 Gew.-%) | 2,51 | 2,51 |
| Wässrige Dispersion eines polymeren Harzes (III) | 4,50 | 4,50 |
| **Wässrige Phase 2** | | |
| deionisiertes Wasser | 3,25 | - |
| Wässrige Dispersion des Polyamids 2 | 2,46 | - |
| Erfindungsgemäß eingesetztes Verdickungsmittel 2 | - | 8,42 |
| **Organische Phase** | | |
| Mischung von Alu Stapa Hydrolux® 2154 & VP56450 | 5,10 | 5,10 |
| Butylglykol | 6,35 | 6,35 |
| Wässrige Dispersion eines polymeren Harzes (II) | 1,90 | 1,90 |
| Dimethylethanolamin in Wasser (10 Gew.-%) | 0,22 | 0,22 |

**3.8** Beschichtungszusammensetzungen **V6** (nicht erfindungsgemäß) und **B6** (erfindungsgemäß)

Tabelle 1.6: Herstellung von **V6** und **B6**

| | V6 | B6 |
|---|---|---|
| **Wässrige Phase 1** | | |
| Wässrige Dispersion eines polymeren Harzes (IV) | 29,66 | 23,34 |
| Wässrige Lösung eines Na-Mg-Schichtsilikats (3 Gew.-%) | 12,00 | 12,00 |
| deionisiertes Wasser | 13,02 | 13,02 |
| Butylglykol | 3,33 | 3,33 |
| Butanol | 1,57 | 1,57 |
| Dimethylethanolamin in Wasser (10 Gew.-%) | 0,37 | 0,37 |
| Luwipal® 052 | 5,34 | 5,34 |
| 2,4,7,9-Tetramethyl-5-decindiol in Butylglykol (52 Gew.-%) | 2,51 | 2,51 |
| Wässrige Dispersion eines polymeren Harzes (III) | 4,50 | 4,50 |
| **Wässrige Phase 2** | | |
| deionisiertes Wasser | 7,61 | - |
| Disparlon® AQ630 | 3,80 | - |
| Erfindungsgemäß eingesetztes Verdickungsmittel 2 | - | 8,56 |
| **Organische Phase** | | |
| Mischung von Alu Stapa Hydrolux® 2154 & VP56450 | 5,10 | 5,10 |
| Butylglykol | 6,35 | 6,35 |
| Dimethylethanolamin in Wasser (10 Gew.-%) | 0,22 | 0,22 |

**3.9** Beschichtungszusammensetzungen **V7** (nicht erfindungsgemäß) sowie **B7** und **B8** (erfindungsgemäß)

Tabelle 1.7: Herstellung von **V7**, **B7** und **B8**

| | V7 | B7 | B8 |
|---|---|---|---|
| **Wässrige Phase 1** | | | |
| Wässrige Dispersion eines polymeren Harzes (IV) | 26,84 | 14,19 | 14,19 |
| deionisiertes Wasser | 13,02 | 13,02 | 13,02 |
| Butylglykol | 3,33 | 3,62 | 3,62 |
| Butanol | 1,57 | 1,57 | 1,57 |
| Wässrige Dispersion eines polymeren Harzes (II) | 1,65 | 1,65 | 1,65 |
| Rheovis® AS 1130 | 0,21 | 0,21 | 0,21 |
| deionisiertes Wasser | 0,63 | 0,63 | 0,63 |
| Dimethylethanolamin in Wasser (10 Gew.-%) | 0,37 | 0,37 | 0,37 |
| Luwipal® 052 | 3,56 | 3,56 | 3,56 |
| 2,4,7,9-Tetramethyl-5-decindiol in Butylglykol (52 Gew.-%) | 2,51 | 2,51 | 2,51 |
| Wässrige Dispersion eines polymeren Harzes (III) | 4,50 | 4,84 | 4,84 |
| **Wässrige Phase 2** | | | |
| deionisiertes Wasser | 26,34 | 5,29 | 5,01 |
| Disparlon® AQ600 | 6,84 | - | |
| Butylglykol | 1,03 | 0,68 | 0,68 |
| Erfindungsgemäß eingesetztes Verdickungsmittel 2 | - | 16,83 | |
| Erfindungsgemäß eingesetztes Verdickungsmittel 1 | - | - | 17,10 |
| **Organische Phase** | | | |
| Mischung von Alu Stapa Hydrolux® 2154 & VP56450 | 5,10 | 5,10 | 5,10 |
| Butylglykol | 6,35 | 6,35 | 6,35 |
| Wässrige Dispersion eines polymeren Harzes (II) | 1,90 | 1,90 | 1,90 |

(fortgesetzt)

**Organische Phase**

| | | | |
|---|---|---|---|
| Dimethylethanolamin in Wasser (10 Gew.-%) | 0,22 | 0,22 | 0,22 |

**3.10** Beschichtungszusammensetzungen **V8** (nicht erfindungsgemäß) und **B9** (erfindungsgemäß)

Tabelle 1.8: Herstellung von **B9** und **V8**

| | **B9** | **V8** |
|---|---|---|
| **Wässrige Phase 1** | | |
| Wässrige Dispersion eines polymeren Harzes (I) | 9,00 | 19,00 |
| deionisiertes Wasser | 25,45 | 26,94 |
| Butylglykol | 3,33 | 3,47 |
| Butanol | 1,57 | 1,57 |
| Wässrige Dispersion eines polymeren Harzes (II) | 1,65 | 1,65 |
| Rheovis® AS 1130 | 4,32 | 4,75 |
| Dimethylethanolamin in Wasser (10 Gew.-%) | 0,37 | 0,40 |
| Luwipal® 052 | 3,60 | 3,60 |
| 2,4,7,9-Tetramethyl-5-decindiol in Butylglykol (52 Gew.-%) | 2,51 | 2,65 |
| Wässrige Dispersion eines polymeren Harzes (III) | 4,50 | 4,50 |
| Rheovis® PU 1250 | 0,99 | 0,99 |
| **Wässrige Phase 2** | | |
| deionisiertes Wasser | 8,99 | 6,12 |
| Agitan® 281 | 0,03 | 0,02 |
| Wässrige Dispersion des Polyamids 1 | | 5,80 |
| Erfindungsgemäß eingesetztes Verdickungsmittel 1 | 15,91 | |
| 2,4,7,9-Tetramethyl-5-decindiol in Butylglykol (52 Gew.-%) | 0,13 | 0,06 |
| **Organische Phase** | | |
| Mischung von Alu Stapa Hydrolux® 2154 & VP56450 | 4,20 | 4,20 |
| Butylglykol | 6,35 | 6,99 |
| Wässrige Dispersion eines polymeren Harzes (II) | 1,90 | 1,90 |
| Dimethylethanolamin in Wasser (10 Gew.-%) | 0,22 | 0,24 |

**3.11** Zusammenfassung der hergestellten erfindungsgemäßen Beschichtungszusammensetzungen und Vergleichsbeschichtungszusammensetzungen hinsichtlich der jeweils darin enthaltenen Verdickungsmittel (C) (erfindungsgemäß) oder der jeweils darin enthaltenen Polyamid-Komponenten (nicht erfindungsgemäß)

Eine entsprechende Zusammenfassung erfolgt in nachstehender Tabelle 1.9:

| Zusammensetzung | Verdickungsmittel | erfindungsgemäß | nicht erfindungsgemäß |
|---|---|---|---|
| **V1** | Disparlon® AQ630 | | X |
| **V2** | Wässrige Dispersion des Polyamids 2 | | X |
| **B1** | Erfindungsgemäß eingesetztes Verdickungsmittel 2 | X | |
| **B2** | Erfindungsgemäß eingesetztes Verdickungsmittel 2 | X | |
| **V3** | Disparlon® AQ630 | | X |
| **B3** | Erfindungsgemäß eingesetztes Verdickungsmittel 1 | X | |

(fortgesetzt)

| Zusammensetzung | Verdickungsmittel | erfindungsgemäß | nicht erfindungsgemäß |
|---|---|---|---|
| **V4** | Wässrige Dispersion des Polyamids 2 | | X |
| **B4** | Erfindungsgemäß eingesetztes Verdickungsmittel 2 | **X** | |
| **V5** | Wässrige Dispersion des Polyamids 2 | | X |
| **B5** | Erfindungsgemäß eingesetztes Verdickungsmittel 2 | **X** | |
| **V6** | Disparlon® AQ630 | | X |
| **B6** | Erfindungsgemäß eingesetztes Verdickungsmittel 2 | **X** | |
| **V7** | Disparlon® AQ600 | | X |
| **B7** | Erfindungsgemäß eingesetztes Verdickungsmittel 2 | **X** | |
| **B8** | Erfindungsgemäß eingesetztes Verdickungsmittel 1 | **X** | |
| **B9** | Erfindungsgemäß eingesetztes Verdickungsmittel 1 | **X** | |
| **V8** | Wässrige Dispersion des Polyamids 1 | | X |

**4.** Prüfungen und Untersuchungen

*4.1 Untersuchungen hinsichtlich des Auftretens von Nadelstichen*

Diese Untersuchung erfolgt gemäß der vorstehend beschriebenen Methode. Dabei werden die erfindungsgemäße Beschichtungszusammensetzung **B1** sowie die Vergleichsbeschichtungszusammensetzung **V1** als Wasserbasislack auf ein mit einer Füllerlackierung beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 1.10 zusammengefasst. Die Anzahl der Nadelstiche wie angegeben ist auf 200 cm$^2$ normiert.

Tabelle 1.10: Ergebnisse der Untersuchungen hinsichtlich des Auftretens von Nadelstichen

| Schichtdickenbereich Klarlackkeil | V1 | B1 |
|---|---|---|
| 20-30 μm | 9 | 0 |
| 30-40 μm | 28 | 0 |
| 40-50 μm | 0 | 0 |
| **Summe** | **37** | **0** |

Die Ergebnisse belegen, dass die erfindungsgemäße Beschichtungszusammensetzung **B1** enthaltend das erfindungsgemäß eingesetzte Verdickungsmittel (C) im Vergleich zu **V1** enthaltend das kommerziell erhältliche Polyamid Disparlon® AQ 630 ein verbessertes Eigenschaftsprofil hinsichtlich Nadelstichrobustheit zeigt.

*4.2 Untersuchungen hinsichtlich der Lagerstabilität*

Diese Untersuchung erfolgt gemäß der vorstehend beschriebenen Methode. Dabei werden die erfindungsgemäße Beschichtungszusammensetzung **B2** sowie die Vergleichsbeschichtungszusammensetzung **V2** untersucht.

Die Ergebnisse sind in Tabelle 1.11 zusammengefasst.

Tabelle 1.11: Ergebnisse der Untersuchungen hinsichtlich der Lagerstabilität

|  |  | V2 | B2 |
|---|---|---|---|
| Niederscherviskosität (1 s$^{-1}$) | direkt nach Herstellung | 937 | 567 |
|  | nach 2 Wochen Lagerung bei 40 °C | 275 | 596 |
| in mPa·s | Veränderung [%] | -71% | 5% |
| Hochscherviskosität (1000 s$^{-1}$) | direkt nach Herstellung | 82 | 104 |
|  | nach 2 Wochen Lagerung bei 40 °C | 58 | 96 |
| in mPa·s | Veränderung [%] | -29% | -8% |

Die Ergebnisse belegen, dass die erfindungsgemäße Beschichtungszusammensetzung **B2** enthaltend das erfindungsgemäß eingesetzte Verdickungsmittel (C) im Vergleich zu **V2** enthaltend das Polyamid 2 als solches eine sehr gute Lagerstabilität aufweist: das rheologische Verhalten des Wasserbasislackes **B2** ändert sich auch nach einer zweiwöchigen Lagerung bei 40°C kaum. Dahingegen zeigt **V2** eine deutlich schwächere Lagerstabilität.

*4.3 Untersuchungen hinsichtlich des Verlaufs nach einer Schwitzwasserbehandlung*

Diese Untersuchung erfolgt gemäß der vorstehend beschriebenen Methode. Dabei werden die erfindungsgemäßen Beschichtungszusammensetzungen **B1** oder **B3** sowie die Vergleichsbeschichtungszusammensetzungen **V2** oder **V3** jeweils als Wasserbasislack auf ein mit einer Füllerlackierung beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 1.12 zusammengefasst.

Tabelle 1.12: Ergebnisse der Untersuchungen hinsichtlich des Verlaufs nach Schwitzwasserbehandlung

|  |  | V2 | B1 | V3 | B3 |
|---|---|---|---|---|---|
| Long wave (LW) | vor Schwitzwasserbelastung | 7,6 | 2,7 | 2,3 | 2,7 |
|  | nach Schwitzwasserbelastung | 18,1 | 2,6 | 11,2 | 2,5 |
|  | Veränderung [%] | 138% | -4% | 387% | -7% |
| Short wave (SW) | vor Schwitzwasserbelastung | 21,3 | 17,8 | 17,4 | 14,2 |
|  | nach Schwitzwasserbelastung | 21,5 | 14 | 15,1 | 13,7 |
|  | Veränderung [%] | 1% | -21% | -13% | -4% |

Die Ergebnisse belegen, dass die erfindungsgemäßen Beschichtungszusammensetzungen **B1** und **B3** enthaltend das erfindungsgemäß eingesetzte Verdickungsmittel (C) im Vergleich zu **V1** und **V3** enthaltend jeweils das Polyamid Disparlon® AQ 630 bzw. Disparlon® AQ 600 sowohl vor als auch nach der Schwitzwasserbelastung Vorteile aufweisen, die belegen, dass ein Anquellen des Mehrschichtaufbaus umfassend ein jeweils aus einer dieser Zusammensetzungen erhaltene Basislackschicht, welcher sich in hohen LW- bzw. SW-Werten widerspiegelt, nicht auftritt.

*4.4 Untersuchungen hinsichtlich winkelabhängiger Helligkeiten und Flop-Indices*

Diese Untersuchung erfolgt gemäß der vorstehend beschriebenen Methode. Dabei werden die erfindungsgemäße Beschichtungszusammensetzung **B4** sowie die Vergleichsbeschichtungszusammensetzung **V4** jeweils als Wasserbasislack auf ein mit einer Füllerlackierung beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 1.13 zusammengefasst.

Tabelle 1.13:  Ergebnisse der Untersuchungen hinsichtlich der winkelabhängigen Helligkeiten und Flop-Indices

|  | V4 | B4 |
|---|---|---|
| $L^*_{15°}$ | 133,1 | 137,8 |
| $L^*_{25°}$ | 109,7 | 110,2 |
| $L^*_{45°}$ | 68,3 | 65,0 |
| $L^*_{75°}$ | 40,5 | 38,3 |
| $L^*_{110°}$ | 34,0 | 32,8 |
| Flop-Index | 11,7 | 13,0 |

Die Ergebnisse belegen, dass die erfindungsgemäße Beschichtungszusammensetzung **B4** enthaltend ein erfindungsgemäß eingesetztes Verdickungsmittel (C), welches aus dem Polyamid 2 hergestellt worden ist, im Vergleich zu **V4** enthaltend jeweils nur dieses Polyamid 2 als solches einen verbesserten Metalleffekt aufweist, welcher durch eine höhere Helligkeit im 15°-Winkel sowie einen höheren Flop-Index charakterisiert ist.

*4.5 Untersuchungen hinsichtlich des Auftretens von Stippen*

Diese Untersuchung erfolgt gemäß der vorstehend beschriebenen Methode. Dabei werden die erfindungsgemäßen Beschichtungszusammensetzungen **B5, B6, B7, B8** und **B9** sowie die Vergleichsbeschichtungszusammensetzung **V5, V6, V7** und **V8** jeweils als Wasserbasislack auf ein mit einer Füllerlackierung beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 1.14 zusammengefasst.

Tabelle 1.14: Ergebnisse der Untersuchungen hinsichtlich des Auftretens von Stippen

|  | V5 | B5 | V6 | B6 | V7 | B7 | B8 | B9 | V8 |
|---|---|---|---|---|---|---|---|---|---|
| Beurteilung Stippen (Noten 1 bis 5) | 5 | **1** | 5 | **1** | 4 | **1** | **1** | **2** | 5 |

Die Ergebnisse belegen, dass die erfindungsgemäßen Beschichtungszusammensetzungen **B5, B6, B7, B8** und **B9** enthaltend ein erfindungsgemäß eingesetztes Verdickungsmittel (C) im Vergleich zu **V5, V6, V7** und **V8** enthaltend jeweils nur eine Polyamid Komponente signifikant verbesserte Ergebnisse in Bezug auf eine Stippenbildung als Kriterium für die Verträglichkeit bzw. Einarbeitbarkeit der Verdickungsmittel in die Beschichtungszusammensetzungen ermöglichen. Aus einem Vergleich der die **V6** und **B6** betreffenden experimentellen Daten ist zudem zu sehen, dass auch eine Kombination aus einen Polyamid und einem Na-Mg-Schichtsilikat zu einer Stippenbildung führt, eine Kombination von einem erfindungsgemäßen Verdickungsmittel und einem Na-Mg-Schichtsilikat jedoch nicht.

*4.6 Untersuchungen hinsichtlich des Auftretens von Stippen*

Eine erfindungsgemäß eingesetzte wässrige Dispersion eines Verdickungsmittels (*Verdickungsmittel 1*) wird gemäß der vorstehend beschriebenen Methode hinsichtlich des Auftretens von Stippen untersucht. Analog wird eine wässrige Vergleichsdispersion mit einem Festkörperanteil von ca. 28 Gew.-% untersucht, die in einem Anteil von 29 Gew.-% die wässrige Dispersion des *Polyamids 1* (die wiederum einem Festkörperanteil von 22,6 Gew.-% aufweist) und zudem in einem Anteil von 71 Gew.-% die wässrige Dispersion des polymeren Harzes (IV) (hergestellt wie auf Seite 8, Zeilen 5 bis 20 der EP 0 228 003 A1 beschrieben), die wiederum einem Festkörperanteil von 30 Gew.-% aufweist, enthält, jeweils bezogen auf das Gesamtgewicht der Vergleichsdispersion.

Die Ergebnisse sind in Tabelle 1.15 zusammengefasst.

Tab. 1.15

|  | Wässrige Vergleichsdispersion | Verdickungs-mittel 1 |
|---|---|---|
| **Stippenbildung** | 5 | 1 |

Aus Tab. 1.15 ist ersichtlich, dass im Fall der wässrigen Vergleichsdispersion im Gegensatz zum *Verdickungsmittel 1* eine Vielzahl von aufgetretenen Stippen beobachtet werden. Die wässrige Vergleichsdispersion enthält die gleichen polymeren Harze (C1) und (C2), die auch zur Herstellung des *Verdickungsmittels 1* eingesetzt worden sind: im Gegensatz zur Herstellung des *Verdickungsmittels 1,* welches durch ein Verfahren umfassend wenigstens die erfindungsgemäß notwendigen Schritte (1), (2), (3) und (4) erhältlich ist, sind diese polymeren Harze aber lediglich durch Mischen zur Herstellung der wässrigen Vergleichsdispersion eingesetzt worden. Diese Ergebnisse zeigen, dass es erfindungswesentlich ist, dass das erfindungsgemäß eingesetzte Verdickungsmittel (C) durch das Verfahren umfassend wenigstens die erfindungsgemäß notwendigen Schritte (1), (2), (3) und (4) erhalten wird.

**Patentansprüche**

1. Eine wässrige Beschichtungszusammensetzung umfassend
   wenigstens ein Bindemittel (A) umfassend wenigstens ein polymeres Harz (A1) und gegebenenfalls wenigstens ein Vernetzungsmittel (A2),
   wenigstens ein Pigment (B) und
   eine wässrige Dispersion wenigstens eines Verdickungsmittels (C),
   zur zumindest teilweisen Beschichtung eines gegebenenfalls beschichteten Substrats mit einer Basislackschicht, **dadurch gekennzeichnet, dass** das Verdickungsmittel (C) erhältlich ist durch ein Verfahren umfassend wenigstens die Schritte (1), (2), (3) und (4), nämlich

   (1) Herstellen einer Dispersion oder Lösung wenigstens eines polymeren Harzes (C2) in wenigstens einem organischen Lösemittel, wobei das polymere Harz (C2) ein Polyurethan ist,
   (2) Herstellen einer Mischung aus der nach Schritt (1) erhaltenen Dispersion oder Lösung und einer Schmelze oder Lösung wenigstens eines Polyamids als wenigstens ein polymeres Harz (C1), welches eine Säure-Zahl in einem Bereich von 1 bis 200 mg KOH pro g an (C1) aufweist,
   (3) Zugeben von Wasser zu der nach Schritt (2) erhaltenen Mischung und
   (4) Entfernen des organischen Lösemittels aus der nach Schritt (3) erhaltenen Mischung unter Erhalt der wässrigen Dispersion des wenigstens einen Verdickungsmittels (C).

2. Die Beschichtungszusammensetzung gemäß Anspruch 1, **dadurch gekennzeichnet, dass** das relative Gewichtsverhältnis von (C1) zu (C2) zueinander, jeweils bezogen auf deren Festkörpergehalt, im Bereich von 1:10 bis 1:1,5 liegt.

3. Die Beschichtungszusammensetzung gemäß Anspruch 1 oder 2, **dadurch gekennzeichnet, dass** sie einen Festkörpergehalt an dem wenigstens einen Verdickungsmittel (C) in einem Bereich von 0,5 bis 15 Gew.-% aufweist, bezogen auf das Gesamtgewicht der Beschichtungszusammensetzung.

4. Die Beschichtungszusammensetzung gemäß einem der vorstehenden Ansprüche, **dadurch gekennzeichnet, dass** das als polymeres Harz (C1) eingesetzte Polyamid eine Säure-Zahl in einem Bereich von 30 bis 120 mg KOH pro g an (C1) aufweist.

5. Die Beschichtungszusammensetzung gemäß einem der vorstehenden Ansprüche, **dadurch gekennzeichnet, dass** das als polymeres Harz (C1) eingesetzte Polyamid mindestens erhältlich ist durch Umsetzung wenigstens einer Polycarbonsäure ausgewählt aus der Gruppe bestehend aus aliphatischen $C_3$-$C_{22}$-Dicarbonsäuren, Polymeren von aliphatischen $C_{14}$-$C_{22}$-Monocarbonsäuren, und Mischungen davon, mit wenigstens einem aliphatischen $C_2$-$C_{12}$-Di-amin.

6. Die Beschichtungszusammensetzung gemäß einem der vorstehenden Ansprüche, **dadurch gekennzeichnet, dass** das Verdickungsmittel (C) einen Schmelzpunkt im Bereich von 20°C bis 100°C aufweist.

7. Die Beschichtungszusammensetzung gemäß einem der vorstehenden Ansprüche, **dadurch gekennzeichnet, dass** das Pigment (B) wenigstens ein Effektpigment umfasst.

8. Die Beschichtungszusammensetzung gemäß einem der vorstehenden Ansprüche, **dadurch gekennzeichnet, dass** das Bindemittel (A) wenigstens ein Polyurethan und/oder wenigstens ein Poly(meth)acrylat und/oder wenigstens einen Polyester als wenigstens ein polymeres Harz (A1) umfasst.

9.  Die Beschichtungszusammensetzung gemäß einem der vorstehenden Ansprüche, **dadurch gekennzeichnet, dass** sie wenigstens ein weiteres Verdickungsmittel (D) ausgewählt aus der Gruppe bestehend aus Metallsilikaten, Verdickungsmitteln auf Basis von Poly(meth)acrylsäure, Verdickungsmitteln auf Basis von Polyurethanen, polymeren Wachsen und Mischungen davon umfasst.

10. Die Beschichtungszusammensetzung gemäß Anspruch 9, **dadurch gekennzeichnet, dass** das relative Gewichtsverhältnis des Verdickungsmittels (C) zu dem weiteren Verdickungsmittel (D) im Bereich von 80:1 bis 1:1 liegt, bezogen auf deren jeweiligen Festkörpergehalt.

11. Eine Verwendung der wässrigen Beschichtungszusammensetzung gemäß einem der Ansprüche 1 bis 10 zur zumindest teilweisen Beschichtung eines gegebenenfalls beschichteten Substrats mit einer Basislackschicht.

12. Ein Verfahren zur zumindest teilweisen Beschichtung eines gegebenenfalls beschichteten Substrats mit einer Basislackschicht umfassend wenigstens einen Schritt (a)

    (a) zumindest teilweise Beschichtung wenigstens eines gegebenenfalls beschichteten Substrats mit einer Basislackschicht mit der wässrigen Beschichtungszusammensetzung gemäß einem der Ansprüche 1 bis 10.

13. Eine Basislackschicht, welche erhältlich ist durch zumindest teilweise Beschichtung wenigstens eines gegebenenfalls beschichteten Substrats mit der wässrigen Beschichtungszusammensetzung gemäß einem der Ansprüche 1 bis 10 und/oder welche erhältlich ist durch das Verfahren gemäß Anspruch 12.

14. Ein zumindest teilweise mit der wässrigen Beschichtungszusammensetzung gemäß einem der Ansprüche 1 bis 10 oder mit der Basislackschicht gemäß Anspruch 13 beschichtetes Substrat.

**Claims**

1.  An aqueous coating composition comprising
    at least one binder (A) comprising at least one polymeric resin (A1) and optionally at least one crosslinking agent (A2),
    at least one pigment (B), and
    an aqueous dispersion of at least one thickener (C), for at least partly coating an optionally coated substrate with a basecoat film,
    **characterized in that** the thickener (C) is obtainable by a method comprising at least the steps (1), (2), (3), and (4) :

    (1) preparing a dispersion or solution of at least one polymeric resin (C2) in at least one organic solvent, the polymeric resin (C2) being a polyurethane,
    (2) preparing a mixture of the dispersion or solution obtained by step (1) and of a melt or solution of at least one polyamide as at least one polymeric resin (C1), which has an acid number in a range from 1 to 200 mg of KOH per g of (C1),
    (3) adding water to the mixture obtained by step (2), and
    (4) removing the organic solvent from the mixture obtained by step (3), to give the aqueous dispersion of the at least one thickener (C).

2.  The coating composition according to Claim 1, **characterized in that** the relative weight ratio of (C1) to (C2), based in each case on their solids content, is in the range from 1:10 to 1:1.5.

3.  The coating composition according to Claim 1 or 2, **characterized in that** it has a solids content, in terms of the at least one thickener (C), in a range from 0.5 to 15 wt%, based on the total weight of the coating composition.

4.  The coating composition according to any of the preceding claims, **characterized in that** the polyamide used as polymeric resin (C1) has an acid number in a range from 30 to 120 mg of KOH per g of (C1).

5.  The coating composition according to any of the preceding claims, **characterized in that** the polyamide used as polymeric resin (C1) is at least obtainable by a reaction of at least one polycarboxylic acid selected from the group consisting of aliphatic $C_3$-$C_{22}$ dicarboxylic acids, polymers of aliphatic $C_{14}$-$C_{22}$ monocarboxylic acids, and mixtures thereof, with at least one aliphatic $C_2$-$C_{12}$ diamine.

**6.** The coating composition according to any of the preceding claims, **characterized in that** the thickener (C) has a melting point in the range from 20°C to 100°C.

**7.** The coating composition according to any of the preceding claims, **characterized in that** the pigment (B) comprises at least one effect pigment.

**8.** The coating composition according to any of the preceding claims, **characterized in that** the binder (A) comprises at least one polyurethane and/or at least one poly(meth)acrylate and/or at least one polyester as at least one polymeric resin (A1).

**9.** The coating composition according to any of the preceding claims, **characterized in that** it comprises at least one further thickener (D) selected from the group consisting of metal silicates, thickeners based on poly(meth)acrylic acid, thickeners based on polyurethanes, polymeric waxes, and mixtures thereof.

**10.** The coating composition according to Claim 9, **characterized in that** the relative weight ratio of the thickener (C) to the further thickener (D) is in the range from 80:1 to 1:1, based on their respective solids content.

**11.** A use of the aqueous coating composition according to any of Claims 1 to 10 for at least partly coating an optionally coated substrate with a basecoat film.

**12.** A method for at least partly coating an optionally coated substrate with a basecoat film, comprising at least one step (a)

(a) at least partly coating at least one optionally coated substrate with a basecoat film, with the aqueous coating composition according to any of Claims 1 to 10.

**13.** A basecoat film which is obtainable by at least partly coating at least one optionally coated substrate with the aqueous coating composition according to any of Claims 1 to 10 and/or which is obtainable by the method according to Claim 12.

**14.** A substrate coated at least partly with the aqueous coating composition according to any of Claims 1 to 10 or with the basecoat film according to Claim 13.

**Revendications**

**1.** Composition de revêtement aqueuse, comprenant :

au moins un liant (A) comprenant au moins une résine polymère (A1) et éventuellement au moins un agent de réticulation (A2),
au moins un pigment (B) et
une dispersion aqueuse d'au moins un épaississant (C), pour le revêtement au moins partiel d'un substrat éventuellement revêtu avec une couche de vernis de base, **caractérisée en ce que** l'épaississant (C) peut être obtenu par un procédé comprenant au moins les étapes (1), (2), (3) et (4), à savoir :

(1) la fabrication d'une dispersion ou d'une solution d'au moins une résine polymère (C2) dans au moins un solvant organique, la résine polymère (C2) étant un polyuréthane,
(2) la fabrication d'un mélange de la dispersion ou solution obtenue selon l'étape (1) et d'une masse fondue ou d'une solution d'au moins un polyamide en tant qu'au moins une résine polymère (C1), qui présente un indice d'acidité dans une plage allant de 1 à 200 mg KOH par g de (C1),
(3) l'ajout d'eau au mélange obtenu selon l'étape (2) et
(4) l'élimination du solvant organique du mélange obtenu selon l'étape (3) pour obtenir la dispersion aqueuse dudit au moins un épaississant (C).

**2.** Composition de revêtement selon la revendication 1, **caractérisée en ce que** le rapport en poids relatif de (C1) et (C2) l'un par rapport à l'autre, à chaque fois en termes de leur teneur en solides, se situe dans la plage allant de 1:10 à 1:1,5.

**3.** Composition de revêtement selon la revendication 1 ou 2, **caractérisée en ce qu'**elle présente une teneur en solides dudit au moins un épaississant (C) dans une plage allant de 0,5 à 15 % en poids, par rapport au poids total de la composition de revêtement.

4. Composition de revêtement selon l'une quelconque des revendications précédentes, **caractérisée en ce que** le polyamide utilisé en tant que résine polymère (C1) présente un indice d'acidité dans une plage allant de 30 à 120 mg KOH par g de (C1).

5. Composition de revêtement selon l'une quelconque des revendications précédentes, **caractérisée en ce que** le polyamide utilisé en tant que résine polymère (C1) peut au moins être obtenu par mise en réaction d'au moins un acide polycarboxylique choisi dans le groupe constitué par les acides dicarboxyliques en $C_3$-$C_{22}$ aliphatiques, les polymères d'acides monocarboxyliques en $C_{14}$-$C_{22}$ aliphatiques et leurs mélanges, avec au moins une diamine en $C_2$-$C_{12}$ aliphatique.

6. Composition de revêtement selon l'une quelconque des revendications précédentes, **caractérisée en ce que** l'épaississant (C) présente un point de fusion dans la plage allant de 20 °C à 100 °C.

7. Composition de revêtement selon l'une quelconque des revendications précédentes, **caractérisée en ce que** le pigment (B) comprend au moins un pigment à effet.

8. Composition de revêtement selon l'une quelconque des revendications précédentes, **caractérisée en ce que** le liant (A) comprend au moins un polyuréthane et/ou au moins un poly(méth)acrylate et/ou au moins un polyester en tant qu'au moins une résine polymère (A1).

9. Composition de revêtement selon l'une quelconque des revendications précédentes, **caractérisée en ce qu'**elle comprend au moins un épaississant supplémentaire (D) choisi dans le groupe constitué par les silicates métalliques, les épaississants à base d'acide poly(méth)acrylique, les épaississants à base de polyuréthanes, les cires polymères et leurs mélanges.

10. Composition de revêtement selon la revendication 9, **caractérisée en ce que** le rapport en poids relatif entre l'épaississant (C) et l'épaississant supplémentaire (D) se situe dans la plage allant de 80:1 à 1:1, en termes de leur teneur en solides respective.

11. Utilisation de la composition de revêtement aqueuse selon l'une quelconque des revendications 1 à 10 pour le revêtement au moins partiel d'un substrat éventuellement revêtu avec une couche de vernis de base.

12. Procédé de revêtement au moins partiel d'un substrat éventuellement revêtu avec une couche de vernis de base comprenant au moins une étape (a) :

(a) le revêtement au moins partiel d'au moins un substrat éventuellement revêtu avec une couche de vernis de base avec la composition de revêtement aqueuse selon l'une quelconque des revendications 1 à 10.

13. Couche de vernis de base, qui peut être obtenue par revêtement au moins partiel d'au moins un substrat éventuellement revêtu avec la composition de revêtement aqueuse selon l'une quelconque des revendications 1 à 10 et/ou qui peut être obtenue par le procédé selon la revendication 12.

14. Substrat au moins partiellement revêtu avec la composition de revêtement aqueuse selon l'une quelconque des revendications 1 à 10 ou avec la couche de vernis de base selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0877063 A2
- EP 1153989 A1
- WO 2009100938 A1
- EP 0228003 A1
- DE 4438504 A1
- EP 0593454 B1
- DE 19948004 A1
- EP 0787159 B1
- DE 4009858 A1
- DE 4437535 A1
- WO 2005021168 A1
- EP 0562329 A2
- DE 2506211 A1
- US 2793219 A
- US 2955121 A

### In der Beschreibung aufgeführte Nicht-Patentliteratur

- Römpp Lexikon, Lacke und Druckfarben. Georg Thieme Verlag, 1998
- Römpp Lexikon Lacke und Druckfarben. Georg Thieme Verlag, 1998
- Römpp Lexikon Lacke und Druckfarben. Georg Thieme Verlag, 1998, 176
- Römpp Lexikon Lacke und Druckfarben. Georg Thieme Verlag, 1998, 250 ff
- Römpp Chemie Lexikon. Thieme Verlag, 1995
- **A.B.J. RODRIGUEZ.** *JOCCA,* 1992, vol. 4, 150-153